# EUROPEAN PATENT APPLICATION

(11) **EP 4 842 036 A1**
(43) Date of publication of application: **18.11.2026**
(21) Application number: 24915934.4
(22) Date of filing: 09.01.2024
(51) Int. Cl.: H04W 24/02

(54) **INFORMATION INDICATION METHOD, TERMINAL DEVICE, AND NETWORK DEVICE**

(71) Applicant: Shenzhen TCL New Technology Co., Ltd., Shenzhen, Guangdong 518000 (CN)
(72) Inventor: LIU, Kai, Shenzhen, Guangdong 518000 (CN)
(74) Representative: Herrero & Asociados, S.L.
(86) International application number: PCT/CN2024/071390
(87) International publication number: WO 2025/147853

(57) **Abstract**

Disclosed in the present disclosure are an information indication method, a terminal device, and a network device. The method comprises: receiving configuration information from a network device, the configuration information comprising at least one of the following: a resource of reported beam-related information, a beam management program, a related configuration of an indication beam, and a related configuration of a time offset; and in response to the configuration information, reporting the beam-related information, the beam-related information comprising at least one of the following: beam indication information, information of the beam management program, and information of the time offset. By means of beam management assisted by a terminal device, the present invention can save resources in a beam management process and reduce the time delay of the beam management process.

## Description

### TECHNICAL FIELD

The present disclosure relates to the field of communication technology, and more particularly, to an information indication method, a terminal device, and a network device.

### BACKGROUND

The enhancement of beam management for Multiple-Input Multiple-Output (MIMO) technology is mainly achieved by precisely controlling signal direction through beamforming technology, thereby improving signal reception quality and reducing interference. This technology supports spatial multiplexing, which allows for the simultaneous transmission of multiple data streams and significantly improves spectral efficiency. Enhanced beam management for MIMO technology significantly improves the performance of wireless communication systems, including by increasing data transmission rates, increasing system capacity, improving signal quality, and reducing interference.

However, existing beam management procedures can only perform measurements for beams to be used currently. They cannot predict beams that could be used after a period of time in order to select appropriate beams for signaling and data transmission. This causes latency in the beam management procedure, and existing beam management procedures also consume a large amount of resources.

### SUMMARY

An object of the present disclosure is to provide an information indication method, a terminal device, and a network device to address the problems in the existing technologies.

The present disclosure provides a method for information indication, performed by a terminal device, wherein the method comprises: receiving configuration information from a network device, wherein the configuration information comprises at least one of the following: a resource for reporting beam-related information, a beam management procedure, a configuration related to indicating a beam, and a configuration related to a time offset; and in response to the configuration information, reporting beam-related information, wherein the beam-related information comprises at least one of the following: beam indication information, information of the beam management procedure, and information of the time offset.

The present disclosure also provides a method for information indication, performed by a network device, wherein the method comprises: sending configuration information to a terminal device, wherein the configuration information comprises at least one of the following: a resource for reporting beam-related information, a beam management procedure, a configuration related to indicating a beam, and a configuration related to a time offset; and receiving, from the terminal device, beam-related information reported in response to the configuration information, wherein the beam-related information comprises at least one of the following: beam indication information, information of the beam management procedure, and information of the time offset.

The present disclosure also provides a terminal device, which comprises a processor, wherein the processor is configured to execute instructions to implement the method as described above.

The present disclosure also provides a network device, which comprises a processor, wherein the processor is configured to execute instructions to implement the method as described above.

The beneficial effect of the present disclosure is that the terminal device reports beam-related information, where the beam-related information includes at least one of the following: beam indication information, information of the beam management procedure, and information of the time offset, thereby enabling terminal-assisted beam management. Based on the information reported by the terminal device related to a predicted beam, a beam management procedure, and/or a predicted time, the network device schedules the terminal device to perform beam management and measurement. This can save resources in the beam management procedure and reduce the latency of the beam management procedure.

### BRIEF DESCRIPTION OF THE DRAWINGS

To more clearly illustrate the technical solutions in the embodiments of the present disclosure, the accompanying drawings required for describing the embodiments are briefly introduced below. It is to be understood that the drawings in the following description are only some embodiments of the present disclosure, and for a person of ordinary skill in the art, other drawings can also be obtained based on these drawings without creative labor. Wherein:
FIG. 1 shows a schematic diagram of downlink beam management.
FIG. 2 shows a schematic diagram of Channel State Information-Reference Signal (CSI-RS) measurement and Channel State Information (CSI) reporting.
FIG. 3 shows a schematic diagram of beam changes when a User Equipment (UE) is in motion.
FIG. 4 shows a schematic diagram of a communication control system according to an embodiment of the present disclosure.
FIG. 5 shows a block diagram of a terminal device and a network device for wireless communication in a communication control system according to an embodiment of the present disclosure.
FIG. 6A shows a flowchart of a method for information indication according to one embodiment of the present disclosure.
FIG. 6B shows a flowchart of a method for information indication according to another embodiment of the present disclosure.
FIG. 7 shows a schematic diagram of performing beam management when a UE is in motion according to an embodiment of the present disclosure.
FIG. 8 shows a schematic diagram of a specific process of beam management when a UE is in motion according to an embodiment of the present disclosure.
FIG. 9 shows a schematic diagram of performing beam management when a UE is rotating according to an embodiment of the present disclosure.
FIG. 10 shows a schematic diagram of a specific process of beam management when a UE is rotating according to an embodiment of the present disclosure.
FIG. 11 shows a schematic diagram of reporting a selected CSI reporting configuration in the form of a bitmap according to an embodiment of the present disclosure.
FIG. 12 shows a schematic diagram of a correspondence relationship between a CSI reporting configuration list and a selected CSI reporting configuration according to an embodiment of the present disclosure.
FIG. 13 shows a schematic diagram of a Medium Access Control Control Element (MAC CE) for reporting a selected CSI reporting configuration according to an embodiment of the present disclosure.
FIG. 14 shows a schematic diagram of reporting a selected CSI-RS resource set in the form of a bitmap according to an embodiment of the present disclosure.
FIG. 15 shows a schematic diagram of a MAC CE for reporting a selected CSI-RS resource set according to an embodiment of the present disclosure.
FIG. 16 shows a schematic diagram of reporting a selected Sounding Reference Signal (SRS) resource set in the form of a bitmap according to an embodiment of the present disclosure.
FIG. 17 shows a schematic diagram of a MAC CE for reporting a selected SRS resource set according to an embodiment of the present disclosure.
FIG. 18 shows a schematic diagram of reporting a selected Transmission Configuration Indication (TCI) state in the form of a bitmap according to an embodiment of the present disclosure.
FIG. 19 shows a schematic diagram of reporting a selected TCI state in the form of a bitmap and indicating uplink or downlink according to an embodiment of the present disclosure.
FIG. 20 shows a schematic diagram of a MAC CE for reporting a selected TCI state according to an embodiment of the present disclosure.
FIG. 21 shows a schematic diagram of a MAC CE for reporting a selected TCI state and indicating uplink or downlink according to an embodiment of the present disclosure.
FIG. 22 shows a schematic diagram of reporting a selected spatial relation in the form of a bitmap according to an embodiment of the present disclosure.
FIG. 23 shows a schematic diagram of a MAC CE for reporting a selected spatial relation according to an embodiment of the present disclosure.
FIG. 24 shows a schematic diagram of an example of reporting a selected beam management procedure in the form of a bitmap according to an embodiment of the present disclosure.
FIG. 25 shows a schematic diagram of another example of reporting a selected beam management procedure in the form of a bitmap according to an embodiment of the present disclosure.
FIG. 26 shows a schematic diagram of yet another example of reporting a selected beam management procedure in the form of a bitmap according to an embodiment of the present disclosure.
FIG. 27 shows a schematic diagram of a MAC CE for reporting a selected beam management procedure according to an embodiment of the present disclosure.
FIG. 28 shows a schematic diagram of reporting a selected TCI state/spatial relation and beam management procedure in the form of a bitmap according to an embodiment of the present disclosure.
FIG. 29 shows a schematic diagram of a MAC CE for reporting a selected TCI state/spatial relation and beam management procedure according to an embodiment of the present disclosure.
FIG. 30 shows a schematic diagram of reporting a selected TCI state/spatial relation and a preset parameter in the form of a bitmap according to an embodiment of the present disclosure.
FIG. 31 shows a schematic diagram of reporting a selected CSI reporting configuration and a time offset amount in the form of a bitmap according to an embodiment of the present disclosure.
FIG. 32 shows a schematic diagram of a MAC CE for reporting a selected CSI reporting configuration and a time offset amount according to an embodiment of the present disclosure.

### DETAILED DESCRIPTION

In order to illustrate the embodiments of the present disclosure or the related art more clearly, a brief overview of several embodiments will be introduced below. Obviously, these illustrations are merely some embodiments of the present disclosure, and a person of ordinary skill in the art may obtain other illustrations according to these illustrations.

The present disclosure relates to the implementation of beam management assisted by a terminal device (e.g., User Equipment (UE)). The terminal device reports information related to a predicted beam, a beam management procedure, and/or a predicted time to a network device (e.g., Multiple Transmission Reception Point (TRP), Base Station (BS), specifically such as gNB). Then, the network device schedules the terminal device for beam management and measurement according to the information reported by the terminal device. The present disclosure can save resources in the beam management procedure and reduce the delay of the beam management procedure.

The existing beam management procedures are introduced below. The beam management procedures can be divided into a downlink beam management procedure and an uplink beam management procedure, the specific implementations of which are described as follows.

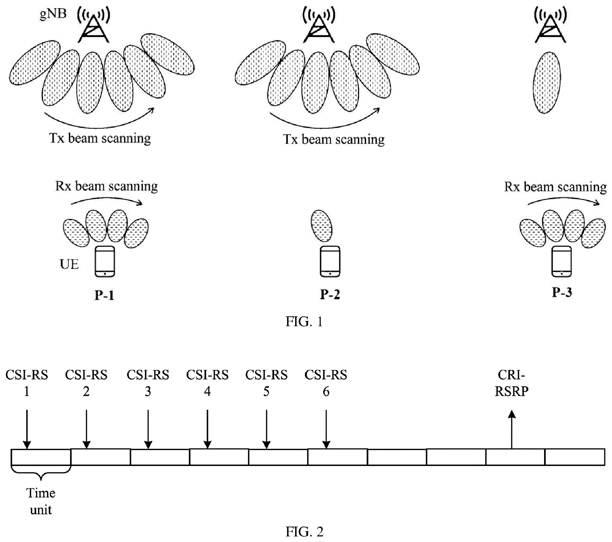

Please refer to FIG. 1, existing downlink beam management includes the following three procedures P-1 to P-3:
P-1: used to enable the UE to measure different base station transmit beams to support selection of base station transmit beam / UE receive beam.
P-2: used to enable the UE to measure different base station transmit beams to change the transmit beam of the base station.
P-3: in a case where the UE uses beamforming, used to enable the UE to measure a same base station transmit beam to change the UE receive beam.

The transmit beam of the base station in P-1 can be a relatively wide beam, and the transmit beam of the base station in P-2 can be a relatively narrow beam.

Reference signals used for downlink beam management are usually a Channel State Information-Reference Signal (CSI-RS) and a Synchronization Signal Block (SSB). Specifically, in the P-1 and P-2 procedures, within one sweeping period, the base station transmits CSI-RSs or SSBs using different beams at different times. After the UE measures the CSI-RSs or SSBs within this period, the UE sends a Channel State Information (CSI) report to the base station, wherein the CSI report includes beam quality information (for example, CRI/SSBRI-RSRP/SINR). In the P-3 procedure, within one sweeping period, the base station transmits CSI-RSs using the same beam at different times. After the UE measures the CSI-RSs within this period, the UE will not send a CSI report to the base station.

Please refer to FIG. 2, which illustrates an example of CSI-RS measurement and CSI reporting. CSI-RS 1 to CSI-RS 6 correspond to 6 distinct transmit beams transmitted by the base station at different times within one sweeping period. The UE measures these transmit beams, obtains a Reference Signal Received Power (RSRP), and then reports a CSI report containing CSI-RSRP to the base station.

Correspondingly, existing uplink beam management includes the following three procedures U-1 to U-3:
U-1: used to enable the base station to measure different UE transmit beams to support selection of a UE transmit beam / base station receive beam.
U-2: used to enable the base station to measure different UE transmit beams to change the receive beam of the base station.
U-3: used to enable the base station to measure a same UE transmit beam to change the base station receive beam.

The transmit beam of the UE in U-1 can be a relatively wide beam, and the transmit beam of the UE in U-2 can be a relatively narrow beam.

A reference signal used for uplink beam management is usually a Sounding Reference Signal (SRS). Specifically, in the U-1 and U-2 procedures, within one sweeping period, the UE transmits SRSs using different beams to the base station at different times. After the base station measures the SRSs within this period, the base station will not send beam quality information to the UE. In the U-3 procedure, within one sweeping period, the UE transmits SRSs using the same beam to the base station at different times. After the base station measures the SRSs within this period, the base station also will not send beam quality information to the UE.

The motivation and inventive concepts of the embodiments of the present disclosure are elaborated below.

In existing beam management procedures, whether it is a downlink beam management procedure or an uplink beam management procedure, the configuration of the reference signal and the configuration of reporting after measurement (e.g., time-frequency resource, period, etc.) are determined by the base station. Although the base station can obtain the communication quality of the link through CSI reporting and measuring uplink signals, it is not easy for the base station to sense changes in the link quality in a timely manner. For example, if the UE's reporting interval is relatively long, even if the UE knows that the link quality is poor, there is no way to change it, and the base station can only wait until the next reporting time to decide whether to perform beam adjustment. Alternatively, if the UE's reporting interval is relatively short, the UE can report in a timely manner, but this will result in a large signaling overhead.

Compared to the base station which can only sense the link quality based on measurement reports, the UE can sense the link quality by measuring various other signals (e.g., PDSCH). Moreover, the UE knows the changes in its own position, velocity, angle, and other information better than the base station, so the UE can more easily predict changes in the link quality and the measures that need to be taken after the changes. Therefore, a beam management procedure triggered by the UE can maintain link quality in a timely manner, reduce the probability of call drops, and save reporting resources.

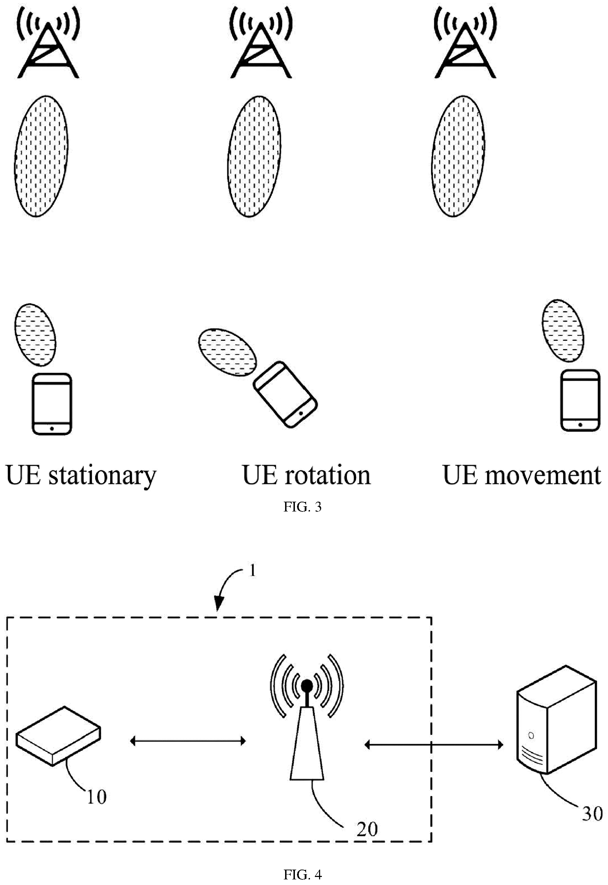

Please refer to FIG. 3. After completing the beam sweeping, the base station and the UE establish a transmit-receive beam pair for link transmission. However, after the UE rotates or moves, the previously established transmit-receive beam pair will be difficult to maintain link transmission. At this time, the base station and the UE need to re-establish a beam pair. Since the base station is unclear about the situation of the UE, it needs to establish it through the P-1, P-2, P-3 and/or U-1, U-2, U-3 procedures, which requires a lot of resources and a long time. However, since the UE knows its own situation, it can directly inform the base station of the needed procedure. For example, in the case of rotation, the UE can directly request to perform the P-3 procedure to establish a beam pair. In the case of movement, the UE can directly request the P-2 and P-3 procedures to establish a beam pair.

Through the above-described UE-triggered beam management, resources in the beam management procedure can be saved and the delay of the beam management procedure can be reduced.

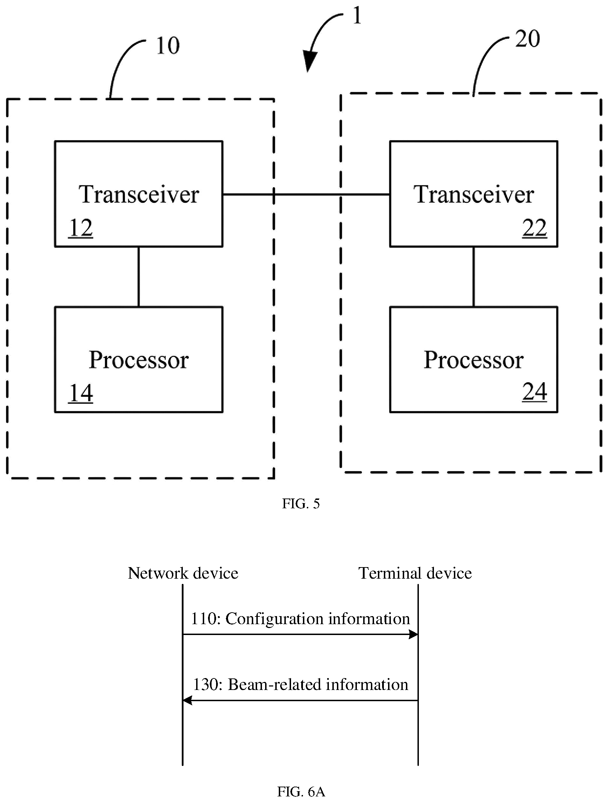

FIG. 4 and FIG. 5 are schematic diagrams of a possible network architecture applicable to the embodiments of the present disclosure, showing a schematic diagram and a functional block diagram of a communication control system 1 according to the embodiments of the present disclosure, respectively. The communication control system 1 includes a terminal device (e.g., User Equipment (UE)) 10 and a network device (e.g., Multiple Transmission Reception Point (TRP), Base Station (BS), specifically such as eNB, gNB, etc.) 20, and the terminal device 10 and the network device 20 can communicate with each other in a wireless or wired manner. The terminal device 10 and the network device 20 can operate in a New Radio (NR) communication system, and the terminal device 10 can communicate with the network device 20 through the NR communication system; the network device 20 and the terminal device 10 can also operate in other communication systems. The network device 20 and the next generation core network 30 can communicate with each other in a wireless or wired manner. When the communication control system 1 conforms to the New Radio standards of the 3rd Generation Partnership Project (3GPP), the Next Generation Core Network (5GCN) 30 is a backend service network system, and may include network entities such as a User Plane Function (UPF), a Session Management Function (SMF), an Access and Mobility Management Function (AMF), Unified Data Management (UDM), a Policy Control Function (PCF), Control Plane (CP)/User Plane (UP) separation (CUPS), an Authentication Server Function (AUSF), a Network Slice Selection Function (NSSF), a Network Exposure Function (NEF), and the like.

The terminal device 10 includes a transceiver 12 and a processor 14 that are electrically connected to each other. The network device 20 includes a transceiver 22 and a processor 24 that are electrically connected to each other. The transceiver 12 of the terminal device 10 is used to transmit signals to the network device 20, and the processor 24 of the network device 20 processes the signals. The transceiver 22 of the network device 20 is used to transmit signals to the terminal device 10, and the processor 14 of the terminal device 10 processes the signals. Thus, the terminal device 10 and the network device 20 communicate with each other. The processors 14 and 24 may also individually include a memory operably storing various programs and information to operate the connected processor. The memory is, for example, a Read-Only Memory (ROM), a Random Access Memory (RAM), a flash memory, a memory card, a storage medium, or other storage devices. The processors 14 and 24 may include a general-purpose Central Processing Unit (CPU), an Application Specific Integrated Circuit (ASIC), other chipsets, logic circuits, and/or data processing devices. The transceivers 12 and 22 may include a baseband circuit and a Radio Frequency (RF) circuit for processing RF signals. When these embodiments are implemented in software, the techniques described herein can be implemented by modules, programs, functions, entities, etc., that perform the functions described herein. These modules can be stored in the memory and executed by the processor. The memory can be implemented within the processor or implemented outside the processor, in which case those components that can be communicatively coupled to the processor in various ways are known in the art.

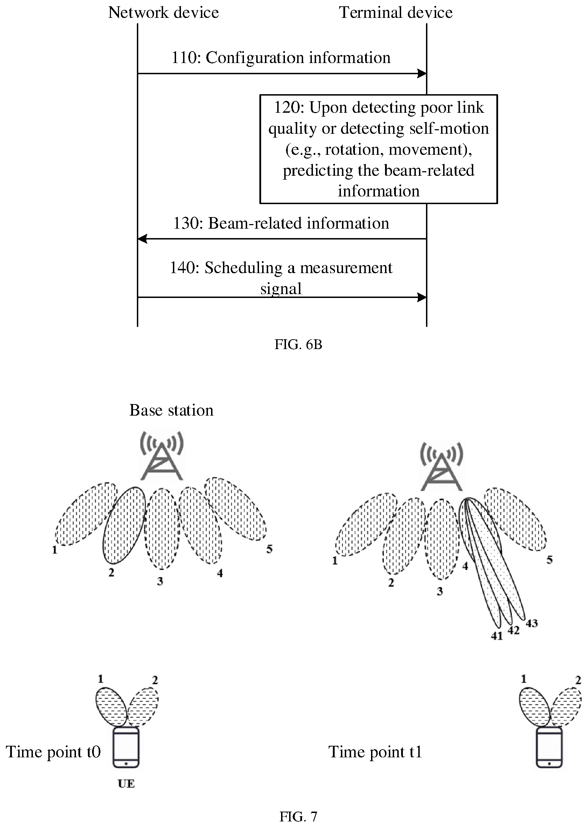

FIG. 6A shows a flowchart of a method 100 for information indication according to one embodiment of the present disclosure, and FIG. 6B shows a flowchart of a method 200 for information indication according to another embodiment of the present disclosure. Please refer to FIG. 6A and FIG. 6B. The method 100 for information indication shown in FIG. 6A includes step 110 and step 130, and the method 200 for information indication shown in FIG. 6B includes step 110, step 120, step 130, and step 140. That is to say, the method for information indication in the present disclosure may add step 120 and step 140 on the basis of FIG. 6A. These steps are optional rather than essential in the present disclosure. The methods 100 and 200 can be performed on the terminal device, and the methods 100 and 200 can be performed by the processor 14 and the transceiver 12 of the terminal device 10 in FIG. 5 cooperating with each other. It can be understood that the network device 20 can also perform a channel measurement method corresponding to the methods 100 and 200, which will not be described again here.

Step 110, configuration information is received.

In this step, the network device sends the configuration information to the terminal device, and the terminal device receives the configuration information from the network device. The configuration information can be configured through Radio Resource Control (RRC) signaling. The configuration information includes at least one of the following: a resource for reporting beam-related information, a beam management procedure, a beam indication-related configuration, and a time offset-related configuration.

The resource for reporting beam-related information refers to the resource required by the terminal device to report the beam-related information (e.g., predicted beam information) in subsequent steps. The resource configuration for reporting beam-related information may include a Physical Uplink Control Channel (PUCCH) configuration or a Physical Uplink Shared Channel (PUSCH) configuration. The terminal device may report the beam-related information to the network device through the configured PUCCH resource or PUSCH resource.

The beam management procedure can be configured by RRC or be predefined. The configuration of the beam management procedure can be a downlink beam sweeping procedure, an uplink beam sweeping procedure, or both. The downlink beam sweeping procedure may include the aforementioned P-1 to P-3 procedures, and the uplink beam sweeping procedure may include the aforementioned U-1 to U-3 procedures. The network device may configure applicable beam sweeping procedures for the terminal device, and the terminal device may indicate to the network device which one or more beam sweeping procedures to perform in subsequent steps.

Specifically, the downlink beam sweeping procedure may include at least one of the following:
(P-1) the network device transmitting using different beams, and the terminal device receiving using different beams;
(P-2) the network device transmitting using different beams, and the terminal device receiving using a same beam;
(P-3) the network device transmitting using a same beam, and the terminal device receiving using different beams.

The uplink beam sweeping procedure may include at least one of the following:
(U-1) the terminal device transmitting using different beams, and the network device receiving using different beams;
(U-2) the terminal device transmitting using different beams, and the network device receiving using a same beam;
(U-3) the terminal device transmitting using a same beam, and the network device receiving using different beams.

The beam indication-related configuration may include one or more of the following: a Channel State Information (CSI) reporting configuration, a Channel State Information-Reference Signal (CSI-RS) resource configuration, a Sounding Reference Signal (SRS) resource configuration, a Transmission Configuration Indication (TCI) state configuration, and a spatial relation configuration. Specifically, the CSI reporting configuration may include a CSI reporting configuration list, and the terminal device may indicate one or more CSI reporting configurations in the list to the network device in subsequent steps to indicate a beam corresponding to the one or more CSI reporting configurations. The CSI-RS resource configuration may include a CSI-RS resource set list, and the terminal device may indicate one or more CSI-RS resource sets in the list to the network device in subsequent steps to indicate a beam corresponding to the one or more CSI-RS resource sets. The SRS resource configuration may include an SRS resource set list, and the terminal device may indicate one or more SRS resource sets in the list to the network device in subsequent steps to indicate a beam corresponding to the one or more SRS resource sets. The TCI state configuration may include a TCI state list, and the terminal device may indicate one or more TCI states in the list to the network device in subsequent steps to indicate a beam corresponding to the one or more TCI states; the spatial relation configuration may include a spatial relation list, and the terminal device may indicate one or more spatial relations in the list to the network device in subsequent steps to indicate a beam corresponding to the one or more spatial relations.

The time offset-related configuration can be used for the terminal device to indicate time offset-related information. The time offset characterizes for which time moment the beam or beam sweeping procedure indicated by the terminal device is intended. A start point of the time offset information can be a time at which the terminal device reports the beam-related information, and an end point of the time offset information can be a time at which the beam-related information is applicable. For example, the network device may configure a plurality of time offset amounts, such as t1, t2...t10, and the terminal device may report one time offset amount from them to indicate the time offset.

Step 120, the beam-related information is predicted upon detecting poor link quality or detecting motion of itself.

In this step, the terminal device detects the signal quality of the link, and when the signal quality is lower than a threshold, predicts the beam-related information. When the terminal device detects that the quality of the currently used beam is poor, it may report other beams to the network device for data transmission, or report a beam sweeping procedure to the network device to reselect a beam. The reported beam-related information (e.g., beam indication information, beam management procedure information, and time offset information) can be predicted by the terminal device according to historical data. For example, one or more beams that have obtained better link quality in the past period of time can be used as predicted beams.

Alternatively, the terminal device detects a state of the terminal device, and when the state is "in motion" (e.g., rotating, moving), predicts the beam-related information. Under a rotating or moving state, the terminal device may render the transmit-receive beam pair originally communicating with the network device inapplicable. Since the terminal device can predict its state in the next time point during its motion, the terminal device can make a prediction about a beam that can obtain better link quality at a certain time point during the motion, or which beam sweeping procedure or procedures through which a better beam can be derived at that time point. For example, when the terminal device is in a rotating state, based on a rotated angle from a first time point to a second time point, the terminal device can predict a beam suitable to be adopted at the second time point. As another example, when the terminal device is in a moving state, based on a moved distance from a first time point to a second time point, the terminal device can predict a beam suitable to be adopted at the second time point.

It should be noted that this step is not essential. In some cases, this step may not be executed. For example, the terminal device can report the beam-related information periodically or aperiodically, so that the network device selects a corresponding beam for data transmission according to the reported beam-related information, or selects a corresponding beam management procedure to select a better beam. Therefore, this step can be omitted.

Step 130, the beam-related information is reported.

In this step, in response to the configuration information, the terminal device reports the beam-related information to the network device, and the beam-related information includes at least one of the following: beam indication information, beam management procedure information, and time offset information.

The beam indication information is used to indicate one or more beams to the network device, which may be a wide beam or one or more narrow beams within a wide beam. For example, the beam indication information may indicate a beam that can obtain better link quality at a certain time point. The beam indication information may include at least one of the following:
a Channel State Information (CSI) reporting configuration;
a Channel State Information-Reference Signal (CSI-RS) resource set;
a Sounding Reference Signal (SRS) resource set;
a Transmission Configuration Indication (TCI) state; and
a spatial relation.

Specifically, the beam indication information may indicate one or more CSI reporting configurations in the CSI reporting configuration list, to indicate a beam corresponding to the one or more CSI reporting configurations. The beam indication information may indicate one or more CSI-RS resource sets in the CSI-RS resource set list, to indicate a beam corresponding to the one or more CSI-RS resource sets. The beam indication information may indicate one or more SRS resource sets in the SRS resource set list, to indicate a beam corresponding to the one or more SRS resource sets. The beam indication information may indicate one or more TCI states in the TCI state list, to indicate a beam corresponding to the one or more TCI states. The beam indication information may indicate one or more spatial relations in the spatial relation list, to indicate a beam corresponding to the one or more spatial relations.

The beam management procedure information may include one or more of the following: beam sweeping procedure P-1, beam sweeping procedure P-2, beam sweeping procedure P-3, beam sweeping procedure U-1, beam sweeping procedure U-2, and beam sweeping procedure U-3. That is, the terminal device can report one or more beam sweeping procedures to indicate the network device to determine a better transmit-receive beam pair according to the reported one or more beam sweeping procedures.

The time offset information characterizes for which time moment the beam or beam sweeping procedure indicated by the terminal device is intended. For example, the terminal device can report a time offset amount to indicate the time offset.

A channel for sending the beam-related information may be a PUCCH or a PUSCH. The indication of the beam-related information may adopt a form of a bitmap, identifiers (IDs), combined identifiers, or a MAC CE, which will be detailed later.

Step 140, a measurement signal is scheduled.

In this step, the network device schedules a corresponding measurement signal (e.g., a reference signal) according to the reporting information (i.e., the beam-related information) of the terminal device. The terminal device receives the scheduled reference signal, wherein the reference signal is included in the beam-related information in step 130. For example, the terminal device reports one or more predicted beams, and the network device sends a reference signal corresponding to the one or more predicted beams, so that the terminal device can measure the reference signal and report the measurement result. As another example, the terminal device reports one or more beam sweeping procedures, and the network device schedules a corresponding measurement signal directed to the beam sweeping procedure(s) reported by the terminal device.

It should be noted that this step is not essential. In some cases, this step may not be executed. For example, the network device can select a corresponding beam for data transmission according to the reported beam-related information, so this step can be omitted.

In the method for information indication of the embodiments of the present disclosure, the terminal device reports the beam-related information, and the beam-related information includes at least one of the following: beam indication information, beam management procedure information, and time offset information, realizing beam management assisted by the terminal device. Based on the information reported by the terminal device related to the predicted beam, the beam management procedure, and/or the predicted time, the network device schedules the terminal device to perform beam management and measurement, which in turn can save resources in the beam management procedure and reduce the delay of the beam management procedure.

In order to further illustrate the method shown in FIG. 6, some exemplary methods are described in detail below.

Please refer to FIG. 7, which shows a schematic diagram of performing beam management in a case where a UE moves. Beams 1-5 of the network device (e.g., base station) are beams of different SSBs or CSI-RSs (usually periodic), base station beams 41-43 are beams of different CSI-RSs (usually semi-persistent or aperiodic), and beams 1-2 of the terminal device (e.g., UE) are different receive beams. CSI-RSs 41-43 and SSB 4 are Quasi Co-Located.

At a first time point (e.g., time t0), the UE is under the coverage of a first beam (e.g., SSB 2) of the base station, and the UE predicts that it will later (e.g., at time t1) move under the coverage of a second beam (e.g., SSB 4).

At the first time point, the UE reports the beam-related information (e.g., beam prediction information) to the base station. The beam-related information may be at least one of the following:
- CSI reporting configuration 4, time offset amount t1-t0 (if any)
- CSI-RS resource set 4, time offset amount t1-t0 (if any)
- TCI state 4, beam management procedure P-2, time offset amount t1-t0 (if any).

CSI reporting configuration 4 may include CSI-RS resource set 4, and CSI-RS resource set 4 may include CSI-RS resources (CSI-RS 41, CSI-RS 42, CSI-RS 43) that are quasi co-located with SSB 4, and a repetition parameter of the CSI-RS resource set is set to off (this means that CSI-RS 41, CSI-RS 42, and CSI-RS 43 use different downlink spatial domain filters). This reported information implies that the UE is interested in performing beam refinement on base station beam 4.

A source reference signal for QCL TypeD in TCI state 4 is SSB 4 or CSI-RS 4. In combination with the information of beam management procedure P-2, this similarly implies that the UE is interested in performing beam refinement on base station beam 4.

The time offset amount t1-t0 implies that the UE is interested in performing beam management at a time point t1-t0 after the reporting.

After the UE reports the beam-related information, the base station may send activation information (e.g., DCI or MAC CE) to trigger beam measurement and reporting at time t1. At time t1, the UE will receive CSI-RSs 41-43 sent by the base station using a same beam, and report the measurement results of CSI-RSs 41-43. In this way, the base station can obtain the best transmit beam (e.g., CSI-RS 42). By further passing through beam management procedure P-3, the UE can obtain the best receive beam.

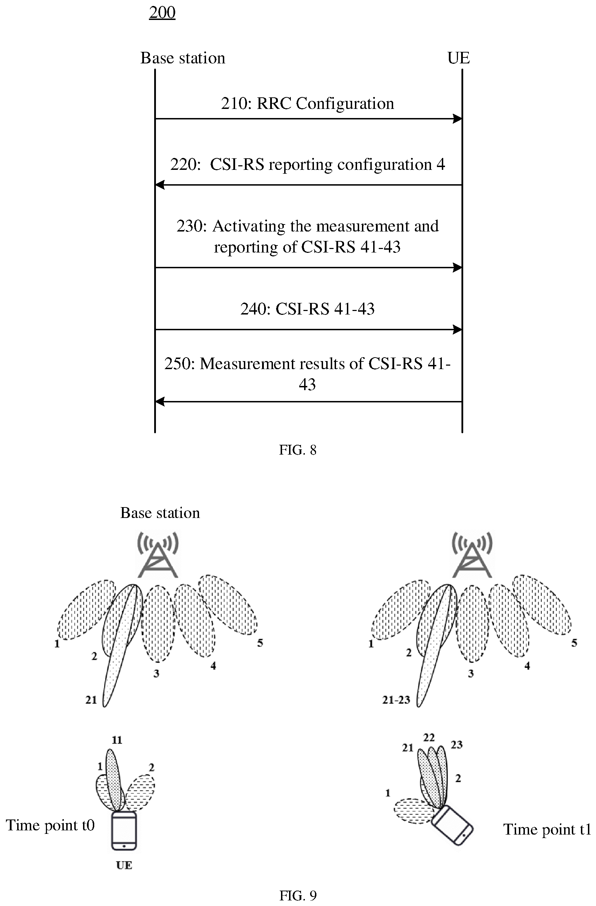

In a case where the UE moves, the specific process of the above beam management is shown in FIG. 8. Please refer to FIG. 8. In step 210, the base station sends configuration information to the UE through RRC signaling, and this step can refer to step 110 above and will not be described again. In step 220, the UE reports beam-related information (e.g., beam prediction information) to the base station at a first time point (e.g., time t0), and the beam-related information is, for example, CSI reporting configuration 4, with its repetition parameter set to off. In step 230, the base station sends activation information to trigger beam measurement and reporting at a second time point (e.g., time t1). In step 240, at the second time point, the UE receives CSI-RSs 41-43 sent down by the base station with a same beam. In step 250, the UE reports the measurement results of CSI-RSs 41-43. Through the above UE-triggered beam management, resources in the beam management procedure can be saved and the delay of the beam management procedure can be reduced.

Please refer to FIG. 9, which shows a schematic diagram of performing beam management in a case where the UE rotates. Beams 1-5 of the network device (e.g., base station) are beams of different SSBs or CSI-RSs (usually periodic), base station beams 21-23 are beams of different CSI-RSs (usually semi-persistent or aperiodic), and beams 1-2, beam 11, and beams 21-23 of the terminal device (e.g., UE) are different receive beams. CSI-RSs 21-23 and SSB 2 are quasi co-located.

At a first time point (e.g., time t0), the communication beam pair between the UE and the base station is CSI-RS 21 and receive beam 11, and the UE predicts that it will rotate by a certain angle (e.g., 60 degrees) later (e.g., at time t1).

At the first time point, the UE reports the beam-related information (e.g., beam prediction information) to the base station. The beam-related information may be at least one of the following:
- CSI reporting configuration 2, time offset amount t1-t0 (if exists)
- CSI-RS resource set 2, time offset amount t1-t0 (if exists)
- TCI state 2, beam management procedure P-3, time offset amount t1-t0 (if exists).

CSI reporting configuration 2 will include CSI-RS resource set 2, and CSI-RS resource set 2 will include CSI-RS resources (CSI-RS 21, CSI-RS 22, CSI-RS 23) that are quasi co-located with SSB 2 or CSI-RS 21, and a repetition parameter of the CSI-RS resource set is set to on (this means that CSI-RS 21, CSI-RS 22, and CSI-RS 23 use the same downlink spatial domain filter). This reported information implies that the UE is interested in performing beam refinement on the UE beam.

A source reference signal for QCL TypeD in TCI state 2 is SSB 2 or CSI-RS 21. In combination with the information of beam management procedure P-3, this similarly implies that the UE is interested in performing beam refinement on the UE beam.

The time offset amount t1-t0 implies that the UE is interested in performing beam management at a time point t1-t0 after the reporting.

After the UE reports the beam-related information, the base station may send activation information (e.g., DCI or MAC CE) to trigger beam measurement and reporting at time t1. At time t1, the UE will receive CSI-RSs 21-23 sent down by the base station using different beams (e.g., UE beams 21-23). In this way, the UE can obtain the best receive beam.

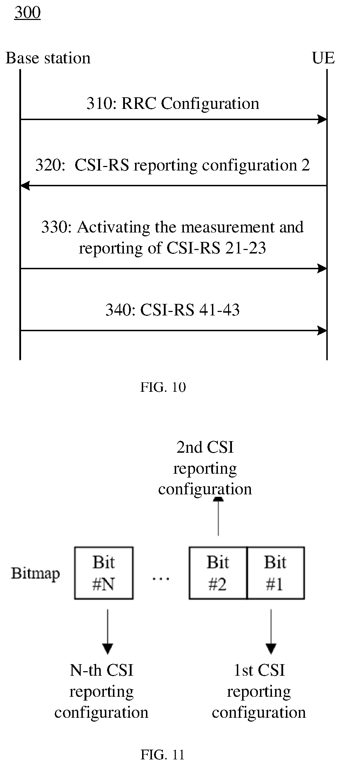

In a case where the UE rotates, the specific process of the above beam management is shown in FIG. 10. Please refer to FIG. 10. In step 310, the base station sends configuration information to the UE through RRC signaling, and this step can refer to step 110 above and will not be described again. In step 320, the UE reports beam-related information (e.g., beam prediction information) to the base station at a first time point (e.g., time t0), and the beam-related information is, for example, CSI reporting configuration 2, with its repetition parameter set to on. In step 330, the base station sends activation information to trigger beam measurement and reporting at a second time point (e.g., time t1). In step 340, at the second time point, the UE receives CSI-RSs 21-23 sent by the base station with different beams (e.g., UE beams 21-23), so that the UE can obtain the best receive beam. Through the above UE-triggered beam management, resources in the beam management procedure can be saved and the delay of the beam management procedure can be reduced.

In some embodiments, the configuration information includes a CSI reporting configuration list, the CSI reporting configuration list includes one or more CSI reporting configurations, and the beam indication information may indicate in at least one of the following ways: indicating one or more selected CSI reporting configurations to the network device in a form of a bitmap; indicating one or more selected CSI reporting configurations to the network device in a form of identifiers; indicating one or more selected CSI reporting configurations to the network device in a form of combined identifiers; or indicating one or more selected CSI reporting configurations to the network device through a MAC CE. Specifically, bits in the bitmap correspond one-to-one to the CSI reporting configurations, a total number of bits of the bitmap corresponds to a number of the CSI reporting configurations, and each bit in the bitmap indicates whether a corresponding CSI reporting configuration is selected. Specifically, one identifier corresponds to one selected CSI reporting configuration. Specifically, one combined identifier corresponds to one or more selected CSI reporting configurations. Specifically, the MAC CE comprises at least a region for the CSI reporting configurations, and a number of bits of the region for the CSI reporting configurations is related to the number of the CSI reporting configurations. The reporting of the CSI reporting configuration indicates one or more downlink beam sets that the UE is interested in, and the UE does not need to traverse and measure all downlink beams, thereby saving downlink resources and reducing delay.

In order to further illustrate the method in the above embodiments, an exemplary method is detailed below as follows:

### RRC Configuration

The above configuration information can be configured through RRC signaling, and the RRC configures a CSI reporting configuration list. The list contains several CSI reporting configurations, assumed to be N. Each CSI reporting configuration has a CSI reporting configuration ID, each CSI reporting configuration is associated with one or more CSI-RS resource sets, and each CSI-RS resource set has one or more CSI-RS resources.

Alternatively or additionally, the RRC configures the number of CSI reporting configurations that can be reported, assumed to be M. When reporting in the form of a bitmap, M does not need to be configured. When reporting in other forms: if M is not configured, M defaults to 1.

### UE Reporting:

Method 1: The User Equipment (UE) reports one or more selected CSI reporting configurations on a Physical Uplink Control Channel (PUCCH) or a Physical Uplink Shared Channel (PUSCH) in the form of a bitmap. The number of bits in the bitmap is equal to the total number of CSI reporting configurations in the CSI reporting configuration list configured by the RRC. Each bit in the bitmap indicates whether a corresponding CSI reporting configuration is selected, as shown in FIG. 11.

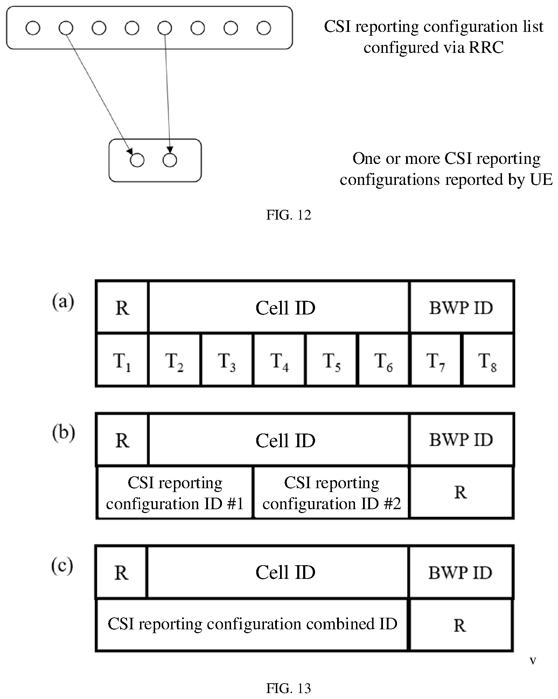

For example, if the bitmap reported by the UE is '00010010', this indicates that out of a total of 8 CSI reporting configurations, the 2nd and 5th CSI reporting configurations are selected, as shown in FIG. 12.

Method 2: The UE reports the identifiers (IDs) of M selected CSI reporting configurations on the PUCCH or PUSCH. The number of bits required for each reported CSI reporting configuration ID is equal to $\left⌈{log}_{2}N\right⌉$, as shown in Table 1.

**Table 1**

| Field | Number of bits |
|---|---|
| CSI reporting configuration ID #1 | $\left⌈{log}_{2}N\right⌉$ |
| CSI reporting configuration ID #2 | $\left⌈{log}_{2}N\right⌉$ |
| ... | ... |
| CSI reporting configuration ID #M | $\left⌈{log}_{2}N\right⌉$ |

Method 3: The UE reports a CSI reporting configuration combination ID on the PUCCH or PUSCH. Each combination ID corresponds to M selected CSI reporting configurations, as shown in Table 2. The number of bits of the reported combination ID is equal to $\left⌈{log}_{2}\left(N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right)\right⌉$ , as shown in Table 3, where $\left(\begin{matrix}N \\ M\end{matrix}\right) = \frac{N ∗ \left(N-1\right) ∗ … ∗ 1}{M ∗ \left(M-1\right) ∗ … ∗ 1}$ represents the number of combinations of selecting M items from N.

**Table 2**

| Combination ID | CSI reporting configuration |
|---|---|
| 0 | First CSI reporting configuration |
| 1 | Second CSI reporting configuration |
| ... | ... |
| N-1 | N-th CSI reporting configuration |
| N | First CSI reporting configuration and second CSI reporting configuration |
| ... | ... |
| $N + \left(\begin{matrix}N \\ 2\end{matrix}\right) - 1$ | (N-1)-th CSI reporting configuration and N-th CSI reporting configuration |
| $N + \left(\begin{matrix}N \\ 2\end{matrix}\right)$ | First, second, and third CSI reporting configurations |
| ... | ... |
| $N + \left(\begin{matrix}N \\ 2\end{matrix}\right) + \left(\begin{matrix}N \\ 3\end{matrix}\right) - 1$ | (N-2)-th, (N-1)-th, and N-th CSI reporting configurations |
| ... | ... |
| $N + \left(\begin{matrix}N \\ 2\end{matrix}\right) + \left(\begin{matrix}N \\ 3\end{matrix}\right) + ⋯ + \left(\begin{matrix}N \\ M\end{matrix}\right) - 1$ | (N-M+1)th CSI reporting configuration and... and Nth CSI reporting configuration |

**Table 3**

| Field | Number of bits |
|---|---|
| CSI reporting configuration combination ID | $\left⌈{log}_{2}\left(N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right)\right⌉$ |

Method 4: The UE reports M selected CSI reporting configurations on the PUSCH in the form of a Medium Access Control Control Element (MAC CE). The MAC CE contains at least one of the following fields: a Cell ID, a BWP ID, and CSI reporting configuration information. FIG. 13 shows two designs for the MAC CE. In the MAC CE in part (a) of FIG. 13, the number of T fields is equal to N, and each CSI reporting configuration in the list is mapped sequentially to a respective T field. In the MAC CE in part (b) of FIG. 13, the number of CSI reporting configuration ID fields is equal to M, and the number of bits for each reported CSI reporting configuration ID field is equal to $\left⌈{log}_{2}N\right⌉$. In the MAC CE in part (c) of FIG. 13, the number of CSI reporting configuration combination ID fields is equal to 1, and its number of bits is equal to $\left⌈{log}_{2}\left(N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right)\right⌉$.

In some embodiments, the configuration information includes a CSI-RS resource set list. The CSI-RS resource set list includes one or more CSI-RS resource sets, and the beam indication information indicates in at least one of the following ways: indicating one or more selected CSI-RS resource sets to the network device in the form of a bitmap; indicating one or more selected CSI-RS resource sets to the network device in the form of identifiers; indicating one or more selected CSI-RS resource sets to the network device in the form of combination IDs; or indicating one or more selected CSI-RS resource sets to the network device via a MAC CE. In the bitmap approach, the bits in the bitmap have a one-to-one correspondence with the CSI-RS resource sets, the total number of bits in the bitmap corresponds to the number of CSI-RS resource sets, and each bit indicates whether the corresponding CSI-RS resource set is selected. **In** the identifier approach, one identifier corresponds to one selected CSI-RS resource set. **In** the combination **ID** approach, one combination **ID** corresponds to one or more selected CSI-RS resource sets. **In** the MAC CE approach, the MAC CE contains at least a field for the CSI-RS resource sets, and the number of bits of the field is related to the number of CSI-RS resource sets. Reporting the CSI-RS resource set(s) indicates one or more downlink beam sets in which the UE is interested. The UE does not need to traverse and measure all downlink beams, thereby saving downlink resources and reducing latency.

To further illustrate the method in the above-described embodiments, an exemplary method is detailed as follows:

### RRC Configuration:

The aforementioned configuration information can be configured by RRC signaling. The RRC configures a CSI-RS resource set list, which contains N CSI-RS resource sets. Each CSI-RS resource set has a CSI-RS resource set ID, and each CSI-RS resource set contains one or more CSI-RS resources.

Additionally/alternatively, the RRC configures the number of CSI-RS resource sets that can be reported, which is assumed to be M. When reporting is performed in the form of a bitmap, M may not be configured. When reporting is performed in other forms, if M is not configured, M defaults to 1.

### UE Reporting:

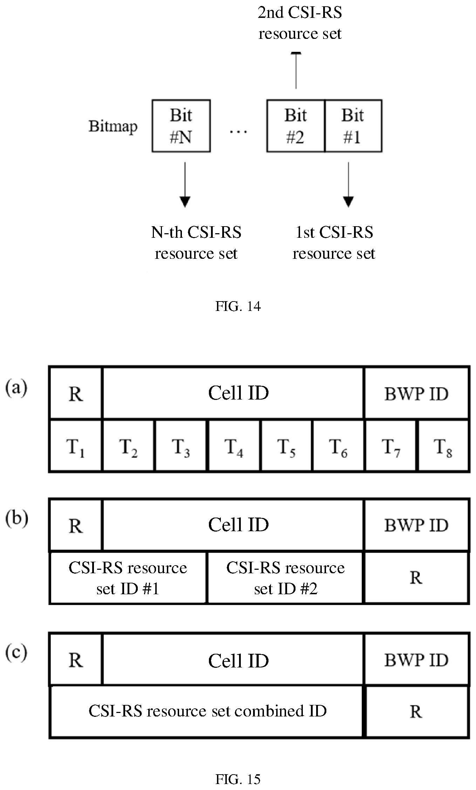

Method 1: The UE reports one or more selected CSI-RS resource sets on the PUCCH or PUSCH in the form of a bitmap. The number of bits in the bitmap is equal to the total number of CSI-RS resource sets in the CSI-RS resource set list configured by the RRC. Each bit in the bitmap indicates whether the corresponding CSI-RS resource set is selected, as shown in FIG. 14.

Method 2: The UE reports the IDs of one or more selected CSI-RS resource sets on the PUCCH or PUSCH. The number of bits required for each reported CSI-RS resource set ID is equal to $\left⌈{log}_{2}N\right⌉$, as shown in Table 4.

**Table 4**

| Field | Number of bits |
|---|---|
| CSI-RS resource set ID #1 | $\left⌈{log}_{2}N\right⌉$ |
| CSI-RS resource set ID #2 | $\left⌈{log}_{2}N\right⌉$ |
| ... | ... |
| CSI-RS resource set ID #N | $\left⌈{log}_{2}N\right⌉$ |

Method 3: A User Equipment (UE) reports a combined identifier (ID) on a Physical Uplink Control Channel (PUCCH) or a Physical Uplink Shared Channel (PUSCH). Each combined ID corresponds to M selected Channel State Information-Reference Signal (CSI-RS) resource sets, as shown in Table 5. The number of bits of the reported combined ID is equal to $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$ , as shown in Table 6, where $\left(\begin{matrix}N \\ M\end{matrix}\right) = \frac{N ∗ \left(N-1\right) ∗ … ∗ 1}{M ∗ \left(M-1\right) ∗ … ∗ 1}$ represents the number of combinations of selecting M items from N.

**Table 5**

| Combined ID | CSI-RS resource set |
|---|---|
| 0 | First CSI-RS resource set |
| 1 | Second CSI-RS resource set |
| ... | ... |
| N-1 | N-th CSI-RS resource set |
| N | First CSI-RS resource set and second CSI-RS resource set |
| ... | ... |
| $N + \left(\begin{matrix}N \\ 2\end{matrix}\right) - 1$ | (N-1)-th CSI-RS resource set and N-th CSI-RS resource set |
| $N + \left(\begin{matrix}N \\ 2\end{matrix}\right)$ | First CSI-RS resource set and second CSI-RS resource set and third CSI-RS resource set |
| ... | ... |
| $N + \left(\begin{matrix}N \\ 2\end{matrix}\right) + \left(\begin{matrix}N \\ 3\end{matrix}\right) - 1$ | (N-2)-th CSI-RS resource set and (N-1)-th CSI-RS resource set and N-th CSI-RS resource set |
| ... | ... |
| $N + \left(\begin{matrix}N \\ 2\end{matrix}\right) + \left(\begin{matrix}N \\ 3\end{matrix}\right) + ⋯ + \left(\begin{matrix}N \\ M\end{matrix}\right) - 1$ | (N-M+1)-th CSI-RS resource set and... and N-th CSI-RS resource set |

**Table 6**

| Region | Number of bits |
|---|---|
| CSI-RS resource combination ID | $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$ |

Method 4: The UE reports one or more selected CSI-RS resource sets on the PUSCH in the form of a MAC CE. The MAC CE contains at least one of the following regions: a Cell ID, a Bandwidth Part (BWP) ID, and CSI-RS resource set information. Two designs for the MAC CE are shown in FIG. 15. In the MAC CE in part (a) of FIG. 15, the number of T regions is determined by the total number of CSI-RS resource sets in the CSI-RS resource set list configured by RRC, and each CSI-RS resource set in the list is mapped sequentially to a respective T region. In the MAC CE in part (b) of FIG. 15, the total number of CSI-RS resource set ID regions is predefined or configured by the RRC, and the total number of bits of each reported CSI-RS resource set ID region is related to the total number of CSI-RS resource sets in the CSI-RS resource set list configured by the RRC. In the MAC CE in part (c) of FIG. 15, the number of CSI-RS resource set combination ID regions is equal to 1, and its number of bits is equal to $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$.

In some embodiments, the configuration information includes a Sounding Reference Signal (SRS) resource set list, which comprises one or more SRS resource sets, and the beam indication information is indicated to a network device by at least one of the following: a bitmap, identifiers, combined identifiers, or a MAC CE. When a bitmap is used, the bits in the bitmap correspond one-to-one with the SRS resource sets, the total number of bits of the bitmap corresponds to the number of the SRS resource sets, and each bit in the bitmap indicates whether a corresponding SRS resource set is selected. When an identifier is used, one identifier corresponds to one selected SRS resource set. When a combined identifier is used, one combined identifier corresponds to one or more selected SRS resource sets. When a MAC CE is used, the MAC CE comprises at least a region for the SRS resource sets, and the number of bits of the region for the SRS resource sets is related to the number of the SRS resource sets. The reporting of the SRS resource set(s) indicates one or more uplink beam sets in which the UE is interested, so the base station does not need to traverse and measure all uplink beams, thereby saving uplink resources and reducing latency.

To further illustrate the method in the above-described embodiments, an exemplary method is detailed below:

### RRC Configuration:

The above-mentioned configuration information can be configured through RRC signaling. RRC configures a list of SRS resource sets, and the list contains a number of SRS resource sets, assumed to be N. Each SRS resource set has an SRS resource set ID, and each SRS resource set has one or more SRS resources.

Alternatively or additionally, RRC configures the number of SRS resource sets that can be reported, assumed to be M. When reporting in the form of a bitmap, M may not be configured. When reporting in other forms, if M is not configured, M defaults to 1.

### UE Reporting:

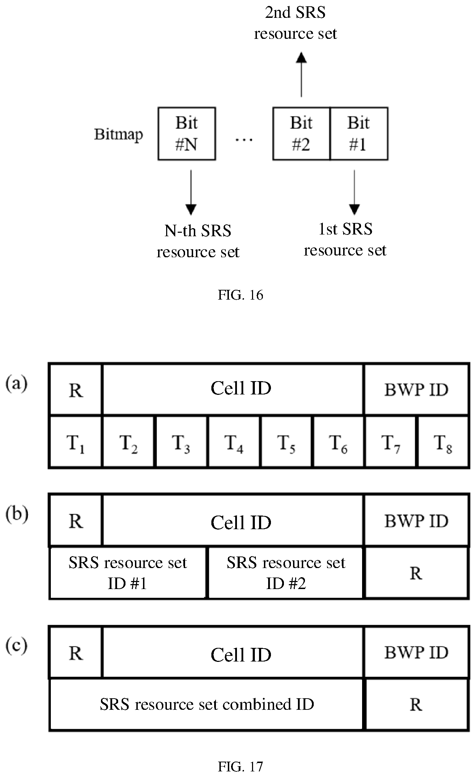

Method 1: The UE reports one or more selected SRS resource sets in the form of a bitmap on PUCCH or PUSCH. The number of bits of the bitmap is equal to the total number of SRS resource sets in the SRS resource set list configured by RRC. Each bit in the bitmap indicates whether the corresponding SRS resource set is selected, as shown in FIG. 16.

Method 2: The UE reports one or more selected SRS resource set IDs on PUCCH or PUSCH. The total number of bits required for each reported SRS resource set ID is equal to $\left⌈{log}_{2}N\right⌉$, as shown in Table 7.

**Table 7**

| Field | Number of bits |
|---|---|
| SRS resource set ID #1 | $\left⌈{log}_{2}N\right⌉$ |
| SRS resource set ID #2 | $\left⌈{log}_{2}N\right⌉$ |
| ... | ... |
| SRS resource set ID #M | $\left⌈{log}_{2}N\right⌉$ |

Method 3: The UE reports a combination ID on PUCCH or PUSCH. Each combination ID corresponds to M selected SRS resource sets, as shown in Table 8. The number of bits of the reported combination ID is equal to $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$, as shown in Table 9, wherein $\left(\begin{matrix}N \\ M\end{matrix}\right) = \frac{N ∗ \left(N-1\right) ∗ … ∗ 1}{M ∗ \left(M-1\right) ∗ … ∗ 1}$ represents the number of combinations of selecting M items from N items.

**Table 8**

| Combination ID | SRS resource set |
|---|---|
| 0 | First SRS resource set |
| 1 | Second SRS resource set |
| ... | ... |
| N-1 | N-th SRS resource set |
| N | First SRS resource set and second SRS resource set |
| ... | ... |
| $N + \left(\begin{matrix}N \\ 2\end{matrix}\right) - 1$ | (N-1)-th SRS resource set and N-th SRS resource set |
| $N + \left(\begin{matrix}N \\ 2\end{matrix}\right)$ | First SRS resource set and second SRS resource set and third SRS resource set |
| ... | ... |
| $N + \left(\begin{matrix}N \\ 2\end{matrix}\right) + \left(\begin{matrix}N \\ 3\end{matrix}\right) - 1$ | (N-2)-th SRS resource set and (N-1)-th SRS resource set and N-th SRS resource set |
| ... | ... |
| $N + \left(\begin{matrix}N \\ 2\end{matrix}\right) + \left(\begin{matrix}N \\ 3\end{matrix}\right) + ⋯ + \left(\begin{matrix}N \\ M\end{matrix}\right) - 1$ | (N-M+1)-th SRS resource set and ... and N-th SRS resource set |

**Table 9**

| Field | Number of bits |
|---|---|
| SRS resource combination ID | $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$ |

Method 4: The UE reports one or more selected SRS resource sets in the form of a MAC CE on PUSCH. The MAC CE contains at least one of the following fields: Cell ID, BWP ID, SRS resource set information. Two MAC CE designs are shown in FIG. 17. In the MAC CE in part (a) of FIG. 17, the number of T fields is determined by the total number of SRS resource sets in the SRS resource set list configured by RRC, and each SRS resource set in the list is sequentially mapped to each T field. In the MAC CE in part (b) of FIG. 17, the total number of SRS resource set ID fields is pre-defined or configured by RRC, and the total number of bits for each reported SRS resource set ID field is related to the total number of SRS resource sets in the SRS resource set list configured by RRC. In the MAC CE in part (c) of FIG. 17, the number of SRS resource set combination ID fields is equal to 1, and its number of bits is equal to $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$.

In some embodiments, the configuration information includes a list of TCI states, the list of TCI states includes one or more TCI states, and the beam indication information indicates in at least one of the following ways: indicating one or more selected TCI states to the network device in the form of a bitmap; indicating one or more selected TCI states to the network device in the form of identifiers; indicating one or more selected TCI states to the network device in the form of combined identifiers; and indicating one or more selected TCI states to the network device via a MAC CE. The bits in the bitmap correspond one-to-one with the TCI states, the total number of bits in the bitmap corresponds to the number of TCI states, and each bit in the bitmap indicates whether the corresponding TCI state is selected. One identifier corresponds to one selected TCI state. One combined identifier corresponds to one or more selected TCI states. The MAC CE contains at least a field for the TCI state, and the number of bits of the field for the TCI state is related to the number of TCI states. The reporting of the TCI state indicates one or more beams that the UE is interested in. The base station or the UE does not need to traverse and measure all beams, which saves resources and reduces latency.

To further illustrate the method in the above embodiment, an exemplary method is detailed as follows:

### RRC Configuration:

The above-mentioned configuration information can be configured through RRC signaling. RRC configures a list of TCI states, and the list contains a number of TCI states, assumed to be N. Each TCI state has a TCI state ID, and each TCI state is associated with at least one CSI-RS, SSB, or SRS of QCL type D.

Alternatively or additionally, RRC configures the number of TCI states that can be reported, assumed to be M. When reporting in the form of a bitmap, M may not be configured. When reporting in other forms, if M is not configured, M defaults to 1.

### UE Reporting:

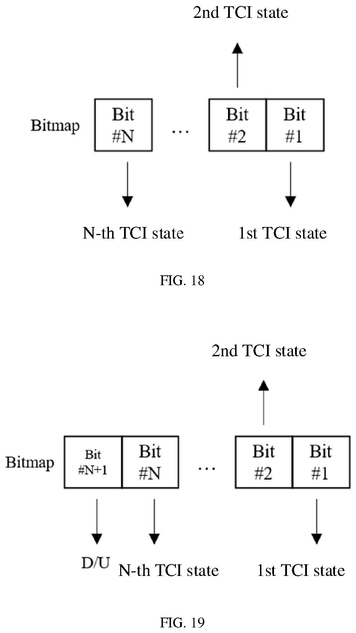

Method 1: The UE reports one or more selected TCI states in the form of a bitmap on PUCCH or PUSCH. The total number of bits of the bitmap is equal to the total number of TCI states in the TCI state list configured by RRC. Each bit in the bitmap indicates whether the corresponding TCI state is selected, as shown in FIG. 18. For example, if the bitmap reported by the UE is '00010010', it means there are a total of 8 TCI states, and the UE reports the 2nd and 5th TCI states.

In a unified TCI framework, a joint TCI state can indicate a TCI state associated with either a downlink beam or an uplink beam. Therefore, it is also necessary to use one bit in the bitmap to indicate downlink or uplink, as shown in FIG. 19.

Method 2: The UE reports one or more selected TCI state IDs on PUCCH or PUSCH. The total number of bits required for each reported TCI state ID is equal to $\left⌈{log}_{2}N\right⌉$, as shown in Table 10.

**Table 10**

| Field | Number of bits |
|---|---|
| TCI state ID #1 | $\left⌈{log}_{2}N\right⌉$ |
| TCI state ID #2 | $\left⌈{log}_{2}N\right⌉$ |
| ... | ... |
| TCI state ID #M | $\left⌈{log}_{2}N\right⌉$ |

For a joint TCI state in a unified TCI framework, one bit is also needed to indicate downlink or uplink, as shown in Table 11.

**Table 11**

| Field | Number of bits |
|---|---|
| TCI state ID #1 | $\left⌈{log}_{2}N\right⌉$ |
| TCI state ID #2 | $\left⌈{log}_{2}N\right⌉$ |
| ... | ... |
| TCI state ID #M | $\left⌈{log}_{2}N\right⌉$ |
| D/U | 1 |

Method 3: The UE reports a combination ID on PUCCH or PUSCH. Each combination ID corresponds to M selected TCI states, as shown in Table 12. The number of bits of the reported combination ID is equal to $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$, as shown in Table 13, wherein $\left(\begin{matrix}N \\ M\end{matrix}\right) = \frac{N ∗ \left(N-1\right) ∗ … ∗ 1}{M ∗ \left(M-1\right) ∗ … ∗ 1}$ represents the number of combinations of selecting M items from N items.

**Table 12**

| Combination ID | TCI state |
|---|---|
| 0 | First TCI state |
| 1 | Second TCI state |
| ... | ... |
| N-1 | N-th TCI state |
| N | First TCI state and second TCI state |
| ... | ... |
| $N + \left(\begin{matrix}N \\ 2\end{matrix}\right) - 1$ | (N-1)-th TCI state and N-th TCI state |
| $N + \left(\begin{matrix}N \\ 2\end{matrix}\right)$ | First TCI state and second TCI state and third TCI state |
| ... | ... |
| $N + \left(\begin{matrix}N \\ 2\end{matrix}\right) + \left(\begin{matrix}N \\ 3\end{matrix}\right) - 1$ | (N-2)-th TCI state and (N-1)-th TCI state and N-th TCI state |
| ... | ... |
| $N + \left(\begin{matrix}N \\ 2\end{matrix}\right) + \left(\begin{matrix}N \\ 3\end{matrix}\right) + ⋯ + \left(\begin{matrix}N \\ M\end{matrix}\right) - 1$ | (N-M+1)-th TCI state and ... and N-th TCI state |

**Table 13**

| Field | Number of bits |
|---|---|
| TCI state combination ID | $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$ |

In a unified TCI framework, one bit is also needed to indicate downlink or uplink, as shown in Table 14.

**Table 14**

| Field | Number of bits |
|---|---|
| TCI state combination ID | $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$ |
| D/U | 1 |

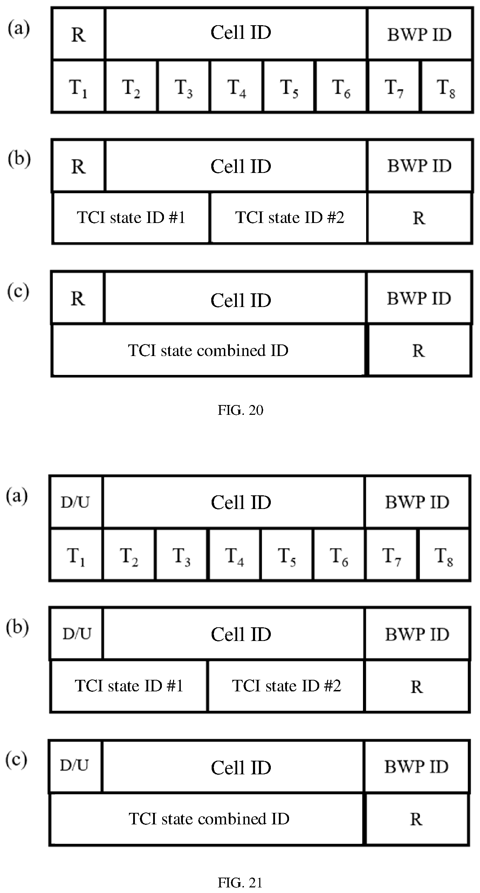

Method 4: The UE reports one or more selected TCI states in the form of a MAC CE on PUSCH. The MAC CE contains at least one of the following fields: Cell ID, BWP ID, TCI state information. Three MAC CE designs are shown in FIG. 20. In the MAC CE in part (a) of FIG. 20, the number of T fields is determined by the total number of TCI states in the TCI state list configured by RRC, and each TCI state in the list is sequentially mapped to each T field. In the MAC CE in part (b) of FIG. 20, the total number of TCI state ID fields is pre-defined or configured by RRC, and the total number of bits for each reported TCI state ID field is related to the total number of TCI states in the TCI state list configured by RRC. In the MAC CE in part (c) of FIG. 20, the number of TCI state combination ID fields is equal to 1, and its number of bits is equal to $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$.

For a joint TCI state in a unified TCI framework, one bit is also needed in the MAC CE to indicate downlink or uplink. Therefore, the MAC CE contains at least one of the following fields: Cell ID, BWP ID, TCI state information, transmission direction information (i.e., uplink or downlink). Three MAC CE designs are shown in FIG. 21.

In some embodiments, the configuration information includes a list of spatial relations, the list of spatial relations includes one or more spatial relations, and the beam indication information indicates in at least one of the following ways: indicating one or more selected spatial relations to the network device in the form of a bitmap; indicating one or more selected spatial relations to the network device in the form of identifiers; indicating one or more selected spatial relations to the network device in the form of combined identifiers; and indicating one or more selected spatial relations to the network device via a MAC CE. The bits in the bitmap correspond one-to-one with the spatial relations, the total number of bits in the bitmap corresponds to the number of spatial relations, and each bit in the bitmap indicates whether the corresponding spatial relation is selected. One identifier corresponds to one selected spatial relation. One combined identifier corresponds to one or more selected spatial relations. The MAC CE contains at least a field for the spatial relation, and the number of bits of the field for the spatial relation is related to the number of spatial relations. The reporting of the spatial relation indicates one or more uplink beams that the UE is interested in. The base station does not need to traverse and measure all uplink beams, which saves uplink resources and reduces latency.

To further illustrate the method in the above embodiment, an exemplary method is detailed as follows:

### RRC Configuration:

The above-mentioned configuration information can be configured through RRC signaling. RRC configures a list of spatial relations, and the list contains a number of spatial relations, assumed to be N. Each spatial relation has a spatial relation ID, and each spatial relation is associated with a CSI-RS, SSB, or SRS.

Alternatively or additionally, RRC configures the number of spatial relations that can be reported, assumed to be M. When reporting in the form of a bitmap, M may not be configured. When reporting in other forms, if M is not configured, M defaults to 1.

### UE Reporting:

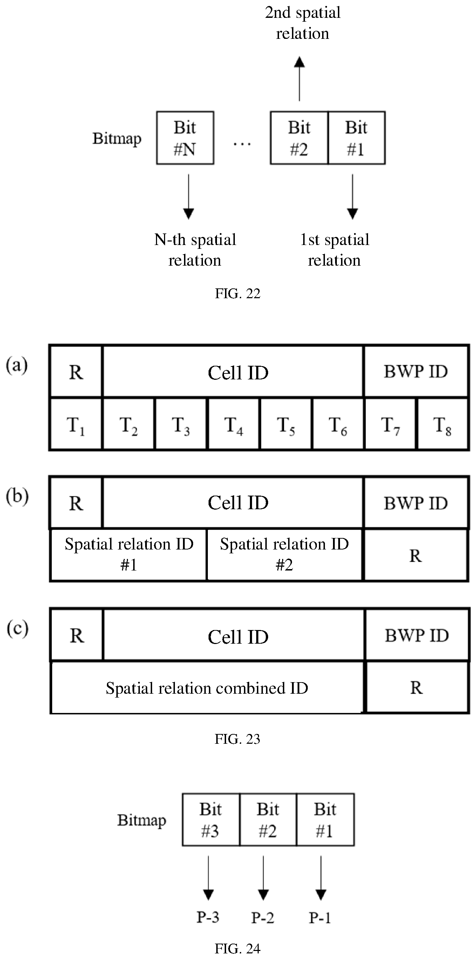

Method 1: The UE reports one or more selected spatial relations in the form of a bitmap on PUCCH or PUSCH. The total number of bits of the bitmap is equal to the total number of spatial relations in the spatial relation list configured by RRC. Each bit in the bitmap indicates whether the corresponding spatial relation is selected, as shown in FIG. 22.

Method 2: The UE reports one or more selected spatial relation IDs on PUCCH or PUSCH. The number of bits required for each reported spatial relation **ID** is equal to $\left⌈{log}_{2}N\right⌉$, as shown in Table 15.

**Table 15**

| Field | Number of bits |
|---|---|
| Spatial relation ID #1 | $\left⌈{log}_{2}N\right⌉$ |
| Spatial relation ID #2 | $\left⌈{log}_{2}N\right⌉$ |
| ... | ... |
| Spatial relation ID #M | $\left⌈{log}_{2}N\right⌉$ |

Method 3: The UE reports a combination ID on PUCCH or PUSCH. Each combination ID corresponds to M selected spatial relations, as shown in Table 16. The number of bits of the reported combination ID is equal to $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$, as shown in Table 17, wherein $\left(\begin{matrix}N \\ M\end{matrix}\right) = \frac{N ∗ \left(N-1\right) ∗ … ∗ 1}{M ∗ \left(M-1\right) ∗ … ∗ 1}$ represents the number of combinations of selecting M items from N items.

**Table 16**

| Combination ID | Spatial relation |
|---|---|
| 0 | First spatial relation |
| 1 | Second spatial relation |
| ... | ... |
| N-1 | N-th spatial relation |
| N | First spatial relation and second spatial relation |
| ... | ... |
| $N + \left(\begin{matrix}N \\ 2\end{matrix}\right) - 1$ | (N-1)-th spatial relation and N-th spatial relation |
| $N + \left(\begin{matrix}N \\ 2\end{matrix}\right)$ | First spatial relation and second spatial relation and third spatial relation |
| ... | ... |
| $N + \left(\begin{matrix}N \\ 2\end{matrix}\right) + \left(\begin{matrix}N \\ 3\end{matrix}\right) - 1$ | (N-2)-th spatial relation and (N-1)-th spatial relation and N-th spatial relation |
| ... | ... |
| $N + \left(\begin{matrix}N \\ 2\end{matrix}\right) + \left(\begin{matrix}N \\ 3\end{matrix}\right) + ⋯ + \left(\begin{matrix}N \\ M\end{matrix}\right) - 1$ | (N-M+1)-th spatial relation and ... and N-th spatial relation |

**Table 17**

| Field | Number of bits |
|---|---|
| Spatial relation combination ID | $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$ |

Method 4: The UE reports one or more selected spatial relations on a Physical Uplink Shared Channel (PUSCH) in the form of a Medium Access Control Control Element (MAC CE). The MAC CE includes at least one of the following fields: a cell ID, a Bandwidth Part (BWP) ID, and spatial relation information. Two designs for the MAC CE are shown in FIG. 23. In the MAC CE in part (a) of FIG. 23, the number of T fields is determined by the total number of spatial relation configurations in a spatial relation list configured by Radio Resource Control (RRC), and each spatial relation configuration in the list is mapped to a respective T field in sequence. In the MAC CE in part (b) of FIG. 23, the total number of spatial relation configuration ID fields is predefined or configured by RRC, and the total number of bits of each reported spatial relation configuration ID field is related to the total number of spatial relation configurations in the spatial relation list configured by RRC. In the MAC CE in part (c) of FIG. 23, the number of spatial relation combination ID fields is 1, and the number of bits thereof is equal to$\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$.

In some embodiments, the beam management procedure is indicated in at least one of the following ways: indicating one or more selected beam management procedures to the network device in a form of a bitmap; indicating one or more selected beam management procedures to the network device in a form of identifiers; indicating one or more selected beam management procedures to the network device in a form of combined identifiers; or indicating one or more selected beam management procedures to the network device through a MAC CE. In the bitmap, the bits have a one-to-one correspondence with the beam management procedures, the total number of bits corresponds to the number of beam management procedures, and each bit indicates whether a corresponding beam management procedure is selected. Each identifier corresponds to one selected beam management procedure. Each combined identifier corresponds to one or more selected beam management procedures. The MAC CE includes at least a field for the beam management procedures, where the number of bits in the field is related to the number of beam management procedures. Reporting the beam management procedure explicitly indicates the beam management procedure(s) of interest to the UE. The base station and/or the UE do not need to perform other beam management procedures, thereby saving resources and reducing delay.

To further illustrate the method in the foregoing embodiments, an exemplary method is detailed as follows:

### UE Reporting:

Method 1: The UE reports one or more selected beam management procedures on a Physical Uplink Control Channel (PUCCH) or a PUSCH in the form of a bitmap.

Example 1: The total number of bits in the bitmap is equal to the number of downlink or uplink beam management procedures. Each bit in the bitmap indicates whether a corresponding beam management procedure is selected. Whether the beam management procedure indicated by the bitmap is for downlink or uplink can be predefined or configured by RRC. Typically, there are three downlink or uplink beam management procedures, so the total number of bits in the bitmap is 3, as shown in FIG. 24.

The example in Table 18 shows the correspondence between the downlink beam management procedures and the reported bitmap. The case for uplink beam management procedures is similar, where P-1, P-2, and P-3 are simply replaced with U-1, U-2, and U-3.

**Table 18**

| Downlink beam management procedure | Bitmap |
|---|---|
| P-1 | '001' |
| P-2 | '010' |
| P-3 | '100' |
| P-1 and P-2 | '011' |
| P-2 and P-3 | '110' |
| P-1 and P-3 | '101' |
| P-1, P-2, and P-3 | '111' |

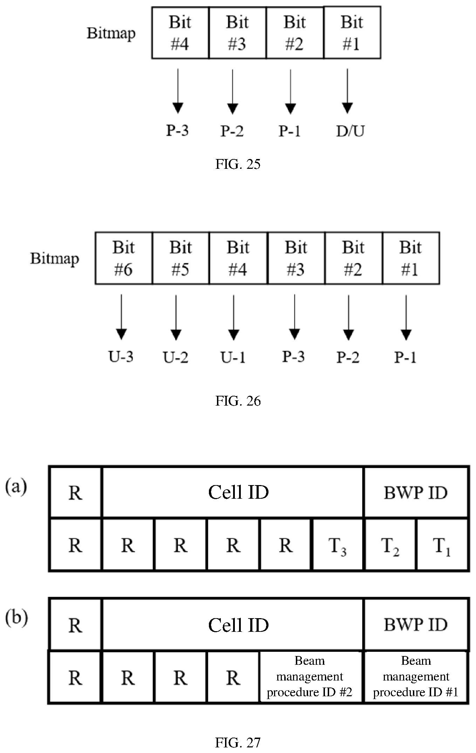

Example 2: The total number of bits in the bitmap is equal to the sum of the number of downlink or uplink beam management procedures and the number of bits for indicating downlink or uplink. Some bits in the bitmap are used to indicate whether downlink or uplink is selected, while the other bits are used to indicate whether a corresponding beam management procedure is selected. Typically, there are three downlink or uplink beam management procedures, and one bit is used for indicating downlink or uplink. Therefore, the total number of bits in the bitmap is 4, as shown in FIG. 25.

The example in Table 19 shows the correspondence between the downlink beam management procedures and the reported bitmap.

**Table 19**

| Beam management procedure | Bitmap |
|---|---|
| P-1 | '0010' |
| P-2 | '0100' |
| P-3 | '1000' |
| P-2 and P-3 | '1100' |
| ... | ... |
| U-1 | '0011' |
| U-2 | '0101' |
| U-3 | '1001' |
| U-2 and U-3 | '1101' |
| | |

Example 3: The total number of bits in the bitmap is equal to the number of downlink and uplink beam management procedures. Each bit in the bitmap indicates whether a corresponding beam management procedure is selected. Typically, the total number of downlink and uplink beam management procedures is 6, so the total number of bits in the bitmap is 6, as shown in FIG. 26.

The example in Table 20 shows the correspondence between the downlink beam management procedures and the reported bitmap. As shown, the UE can report downlink or uplink beam management procedures separately, or report both downlink and uplink beam management procedures simultaneously.

**Table 20**

| Beam management procedure | Bitmap |
|---|---|
| P-1 | '000001' |
| P-2 | '000010' |
| P-2 and P-3 | '000110' |
| ... | ... |
| U-1 | '001000' |
| U-2 | '010000' |
| U-2 and U-3 | '110000' |
| ... | ... |
| P-1 and U-1 | '001001' |
| ... | ... |

Method 2: A UE reports one or more selected downlink or uplink beam management procedure IDs on a PUCCH or a PUSCH.

Example 1: The correspondence between downlink beam management procedures and IDs is shown in Table 21. A single downlink beam management procedure corresponds to one ID; that is, the individual downlink beam management procedures are numbered. This correspondence can be predefined or configured by RRC. The uplink beam management procedures are similar, where P-1, P-2, and P-3 are simply replaced with U-1, U-2, and U-3.

**Table 21**

| ID | Beam management procedure |
|---|---|
| 0 | P-1 |
| 1 | P-2 |
| 2 | P-3 |

The UE reports one or more downlink or uplink beam management procedure IDs. The total number of downlink or uplink beam management IDs that the UE can report is predefined or configured by RRC, and is assumed to be N. Assuming that the total number of downlink or uplink beam management procedure IDs is *M* , the total number of bits required for each reported beam management procedure ID is equal to $\left⌈{log}_{2}M\right⌉$. In this example, there are 3 downlink or uplink beam management procedures, so M is equal to 3, and N is less than or equal to 3. The number of bits required for each reported beam management procedure ID is 2, as shown in Table 22.

**Table 22**

| Field | Number of bits |
|---|---|
| Beam management procedure ID #1 | 2 |
| ... | ... |
| Beam management procedure ID #N | 2 |

The example in Table 23 shows the correspondence between the indication bits reported by the UE and the beam management procedures.

**Table 23**

| Number of beam management procedures | Downlink beam management procedure | Indication bit |
|---|---|---|
| 1 | P-1 | '00' |
| | P-2 | '01' |
| | P-3 | '10' |
| 2 | P-1 and P-2 | '0100' |
| | P-2 and P-3 | '1001' |
| | P-1 and P-3 | '1000' |
| 3 | P-1, P-2, and P-3 | '100100' |

Furthermore, some bits can be added to the indication bits in Example 1 to indicate whether the beam management procedure is for downlink or uplink. The example in Table 24 shows adding 1 bit at the least significant bit of the indication bits to indicate downlink or uplink.

**Table 24**

| Number of beam management procedures | Beam management procedure | Indication bit |
|---|---|---|
| 1 | P-1 | '000' |
| | U-1 | '001' |
| 2 | P-1 and P-2 | '01000' |
| | U-1 and U-2 | '01001' |
| 3 | P-1, P-2, and P-3 | '100100' |
| | U-1, U-2, and U-3 | '100101' |

Example 2: The correspondence between downlink and uplink beam management procedures and IDs is shown in Table 25. A single downlink or uplink beam management procedure corresponds to one ID; that is, the individual downlink and uplink beam management procedures are numbered. This correspondence can be predefined or configured by RRC.

**Table 25**

| ID | Beam management procedure |
|---|---|
| 0 | P-1 |
| 1 | P-2 |
| 2 | P-3 |
| 3 | U-1 |
| 4 | U-2 |
| 5 | U-3 |

The UE reports one or more downlink and uplink beam management procedure IDs. The total number of downlink and uplink beam management IDs that the UE can report is predefined or configured by RRC, and is assumed to be N. Assuming that the total number of downlink and uplink beam management procedure IDs is *M*, the total number of bits required for each reported beam management procedure ID is equal to $\left⌈{log}_{2}M\right⌉$. In this example, the total number of downlink and uplink beam management procedures is 6, so M is equal to 6, and N is less than or equal to 6. The number of bits required for each reported beam management procedure ID is 3, as shown in Table 26.

**Table 26**

| Field | Number of bits |
|---|---|
| Beam management procedure ID #1 | 3 |
| ... | ... |
| Beam management procedure ID #N | 3 |

The example in Table 27 shows the correspondence between the indication bits reported by the UE and the beam management procedures.

**Table 27**

| Number of beam management procedures | Downlink beam management procedure | Indication bit |
|---|---|---|
| 1 | P-1 | '000' |
| | U-1 | '011P' |
| | ... | ·... |
| 2 | P-1 and P-2 | '001000' |
| | P-1 and U-1 | '011000' |
| | ... | ... |
| 3 | P-1 and P-2 and P-3 | '010001000' |
| | P-1 and U-2 and U-3 | '100011000' |
| | ... | ... |

Example 3: The correspondence between downlink beam management procedures and combined identifiers is shown in Table 28. A single downlink beam management procedure or a combination of multiple procedures corresponds to one combined identifier; that is, each single procedure and each combination of multiple procedures are numbered. This correspondence can be predefined or configured by RRC. The uplink beam management procedures are similar, where P-1, P-2, and P-3 are simply replaced with U-1, U-2, and U-3.

**Table 28**

| Combined identifier | Beam management procedure |
|---|---|
| 0 | P-1 |
| 1 | P-2 |
| 2 | P-3 |
| 3 | P-1 and P-2 |
| 4 | P-2 and P-3 |
| 5 | P-1 and P-3 |
| 6 | P-1 and P-2 and P-3 |

A User Equipment (UE) reports only one combined identifier for either downlink or uplink beam management procedure combinations. Assuming that the total number of combined identifiers for downlink or uplink beam management procedure combinations is *M*, the total number of bits required to report the combined identifier is equal to $\left⌈{log}_{2}M\right⌉$. In this example, there are 7 downlink or uplink beam management procedure combinations, so M is equal to 6. The number of bits required to report the combined identifier is 3.

The example in Table 29 shows the correspondence between the indication bits reported by the UE and the beam management procedures.

**Table 29**

| Downlink beam management procedure | Indication bit |
|---|---|
| P-1 | '000' |
| P-2 | '001' |
| P-3 | '010' |
| P-1 and P-2 | '011' |
| P-2 and P-3 | '100' |
| P-1 and P-3 | '101' |
| P-1 and P-2 and P-3 | '110' |

Some bits can be added to the indication bits in Example 3 to indicate whether the beam management procedure is a downlink or an uplink procedure. The example in Table 30 shows adding 1 bit to the least significant bit of the indication bits to indicate a downlink or an uplink procedure.

**Table 30**

| Downlink beam management procedure | Indication bit |
|---|---|
| P-1 | '0000' |
| U-1 | '0001' |
| P-1 and P-2 | '0110' |
| U-1 and U-2 | '011' |
| P-1 and P-2 and P-3 | '1100' |
| U-1 and U-2 and U-3 | '1101' |

Example 4: The correspondence between downlink and uplink beam management procedures and combined identifiers is shown in Table 31. A single procedure or a combination of multiple procedures, for both downlink and uplink, corresponds to one combined identifier; that is, each single procedure and each combination of multiple procedures are numbered. This correspondence can be predefined or configured by RRC.

**Table 31**

| Combination ID | Beam Management Procedure |
|---|---|
| 0 | P-1 |
| 1 | P-2 |
| 2 | P-3 |
| 3 | U-1 |
| 4 | U-2 |
| 5 | U-3 |
| 6 | P-1 and P-2 |
| 7 | P-2 and P-3 |
| 8 | P-1 and P-3 |
| 6 | U-1 and U-2 |
| 7 | U-2 and U-3 |
| 8 | U-1 and U-3 |
| 9 | P-1 and U-1 |
| ... | ... |
| 21 | P-1 and P-2 and P-3 |
| ... | ... |
| 62 | P-1 and P-2 and P-3 and U-1 and U-2 and U-3 |

A UE may report only one of the combination IDs for downlink and uplink beam management procedures. Assuming that the total number of combination IDs for downlink or uplink beam management procedures is *M*, the total number of bits required to report the beam management procedure combination ID is equal to $\left⌈{log}_{2}M\right⌉$. In this example, there are 63 combinations of downlink or uplink beam management procedures, so M will be equal to 63. The number of bits required for each reported beam management procedure combination ID is 6.

The example in Table 32 shows the correspondence between the indication bits reported by the UE and the beam management procedures.

**Table 32**

| Beam management procedure | Indication bits |
|---|---|
| P-1 | '000000' |
| P-2 | '000001' |
| P-3 | '000010' |
| ... | ... |
| P-1 and P-2 | '000110' |
| ... | ... |
| P-1 and P-2 and P-3 | '010101' |
| P-1 and P-2 and P-3 and U-1 and U-2 and U-3 | '111110' |

Method 3: The UE reports one or more selected beam management procedures on the PUSCH in the form of a MAC CE. The MAC CE contains at least one of the following fields: a Cell ID, a Bandwidth Part (BWP) ID, and beam management procedure information. Two MAC CE designs are shown in FIG. 27. In the MAC CE in part (a) of FIG. 27, the number of T fields is determined by the total number of beam management procedures configured by RRC, and each spatial relation configuration in the list is sequentially mapped to a respective T field. In the MAC CE in part (b) of FIG. 27, the total number of beam management procedure ID fields is predefined or configured by RRC, and the total number of bits for each reported spatial relation configuration ID field is related to the total number of spatial relation configurations in the spatial relation configuration list configured by RRC.

If the UE only reports the beam management procedure information, the network device does not know the beam information, and therefore default beam information needs to be defined. The default beam can be defined as the beam corresponding to the Reference Signal (RS) of the TCI state or spatial relation currently indicated to the UE by the network device, and/or the beam corresponding to the RS that is quasi-co-located with the RS of this TCI state or spatial relation, and/or L beams adjacent to the beam corresponding to the RS of this TCI state or spatial relation, where L can be predefined for different beam management procedures or configured by RRC.

For example, in FIG. 7, assume that the beam currently indicated to the UE is CSI-RS 2 and L=2. If the UE reports P-1, the default beams are CSI-RS 1-3, which means that the UE is interested in scanning these beams. Assume that the beam currently indicated to the UE is CSI-RS 2 and L=1. If the UE reports P-2, the default beam is CSI-RS 2, which means that the UE is interested in performing base station beam refinement for this beam. In FIG. 9, assume that the beam currently indicated to the UE is CSI-RS 21. If the UE reports P-3, the default beam is CSI-RS 21, which means that the UE is interested in performing UE beam refinement for this beam.

In some embodiments, the configuration information includes a TCI state list, the TCI state list includes one or more TCI states, and the beam-related information includes beam indication information and information of the beam management procedure. The beam-related information indicates in at least one of the following ways: indicating one or more selected TCI states and one or more selected beam management procedures to the network device in a form of a bitmap; indicating the one or more selected TCI states and the one or more selected beam management procedures to the network device in a form of identifiers; indicating the one or more selected TCI states and the one or more selected beam management procedures to the network device in a form of combined identifiers; or indicating the one or more selected TCI states and the one or more selected beam management procedures to the network device through a MAC CE. Some bits in the bitmap correspond one-to-one with the TCI states, other bits in the bitmap correspond one-to-one with the beam management procedures, a total number of bits of the bitmap corresponds to a number of the TCI states and the beam management procedures, and each bit in the bitmap indicates whether a corresponding TCI state or a corresponding beam management procedure is selected. One identifier corresponds to one selected TCI state or one selected beam management procedure. One combined identifier corresponds to one or more selected TCI states or one or more selected beam management procedures. The MAC CE comprises at least a field for the TCI states and a field for the beam management procedures, wherein a number of bits of the field for the TCI states is related to the number of the TCI states, and a number of bits of the field for the beam management procedures is related to the number of the beam management procedures. In other embodiments, the configuration information includes a spatial relation list, the spatial relation list includes one or more spatial relations, and the beam-related information includes beam indication information and information of the beam management procedure. The beam-related information indicates in at least one of the following ways: indicating one or more selected spatial relations and one or more selected beam management procedures to the network device in a form of a bitmap; indicating the one or more selected spatial relations and the one or more selected beam management procedures to the network device in a form of identifiers; indicating the one or more selected spatial relations and the one or more selected beam management procedures to the network device in a form of combined identifiers; or indicating the one or more selected spatial relations and the one or more selected beam management procedures to the network device through a MAC CE. Some bits in the bitmap correspond one-to-one with the spatial relations, other bits in the bitmap correspond one-to-one with the beam management procedures, a total number of bits of the bitmap corresponds to a number of the spatial relations and the beam management procedures, and each bit in the bitmap indicates whether a corresponding spatial relation or a corresponding beam management procedure is selected. One identifier corresponds to one selected spatial relation or one selected beam management procedure. One combined identifier corresponds to one or more selected spatial relations or one or more selected beam management procedures. The MAC CE comprises at least a field for the spatial relations and a field for the beam management procedures, wherein a number of bits of the field for the spatial relations is related to the number of the spatial relations, and a number of bits of the field for the beam management procedures is related to the number of the beam management procedures. The combination of the TCI state and the beam management procedure more clearly indicates the beam and the beam management procedure in which the UE is interested.

To further illustrate the method in the above embodiments, an exemplary method is detailed as follows:

### UE reporting:

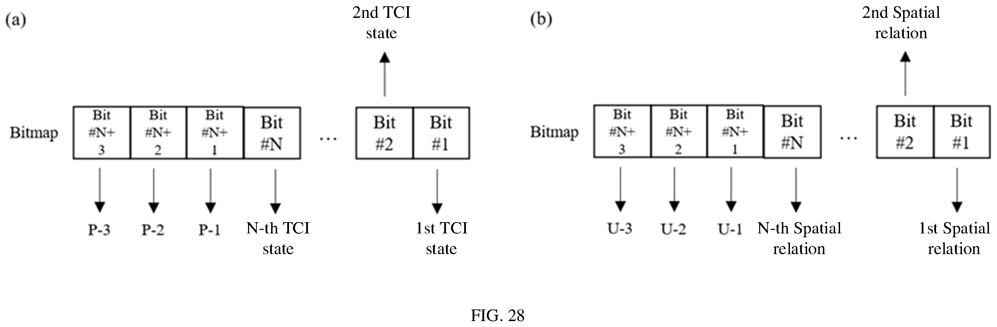

Method 1: The UE reports one or more selected TCI states or spatial relations, and one or more beam management procedures, on the PUCCH or PUSCH in the form of a bitmap. A portion of the bits in the bitmap indicates whether a TCI state or spatial relation is selected, and another portion of the bits indicates whether a beam management procedure is selected. The number of bits for the TCI state or spatial relation and the beam management procedure is consistent with the previous related discussions, as shown in FIG. 28. For a joint TCI state in a unified TCI framework, the joint TCI state can also be associated with an uplink beam management procedure.

Method 2: The UE reports one or more selected TCI state IDs or spatial relation IDs, and one or more beam management procedure IDs, on the PUCCH or PUSCH. The number of bits for the TCI state or spatial relation ID and the beam management procedure ID is consistent with the previous related discussions, as shown in Table 33.

**Table 33**

| Field | Number of bits |
|---|---|
| TCI state or spatial relation ID #1 | $\left⌈{log}_{2}N\right⌉$ |
| TCI state or spatial relation ID #2 | $\left⌈{log}_{2}N\right⌉$ |
| ... | ... |
| TCI state or spatial relation ID #M | $\left⌈{log}_{2}N\right⌉$ |
| Beam management procedure ID #1 | 2 |
| ... | ... |
| Beam management procedure ID #M | 2 |

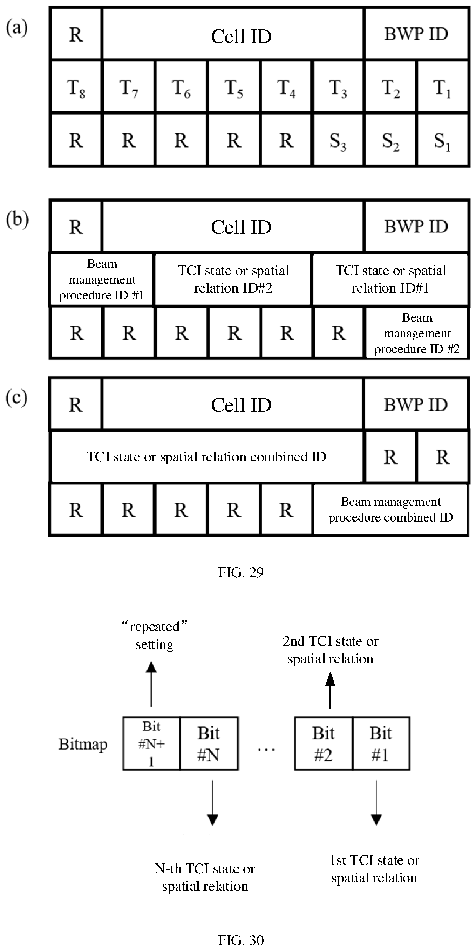

Method 3: The UE reports one or more selected spatial relations, and one or more beam management procedures, in the form of a MAC CE on PUSCH. The MAC CE contains at least one of the following fields: Cell ID, BWP ID, TCI state or spatial relation information, beam management procedure information. Two MAC CE designs are shown in FIG. 29. In the MAC CE in part (a) of FIG. 29, the T field indicates whether the TCI state or spatial relation is selected, and the S field indicates whether the beam management procedure is selected. The number of bits in the MAC CE for indicating the TCI state or spatial relation information, and the beam management procedure information, is consistent with the related discussion above. Parts (b) and (c) of FIG. 29 respectively illustrate schemes indicated by identifier (ID) and combination ID.

In some embodiments, the configuration information includes a list of TCI states, the list of TCI states includes one or more TCI states, and the beam-related information includes beam indication information and a preset parameter (e.g., a repetition parameter). The beam-related information indicates in at least one of the following ways: indicating one or more selected TCI states and the preset parameter to the network device in the form of a bitmap; indicating one or more selected TCI states and the preset parameter to the network device in the form of identifiers; indicating one or more selected TCI states and the preset parameter to the network device in the form of combined identifiers; and indicating one or more selected TCI states and the preset parameter to the network device via a MAC CE. The preset parameter indicates that multiple reference signals use the same downlink spatial domain filter. Some bits in the bitmap correspond one-to-one with the TCI states, and each of those bits indicates whether the corresponding TCI state is selected. One identifier corresponds to one selected TCI state. One combined identifier corresponds to one or more selected TCI states. The MAC CE contains at least a field for the TCI state and a field for the preset parameter, wherein the number of bits of the field for the TCI state is related to the number of TCI states. The preset parameter implicitly indicates the beam management procedure. Reporting the beam management procedure requires multiple bits, while reporting the preset parameter only requires one bit, saving uplink resources.

To further illustrate the method in the above embodiment, an exemplary method is detailed as follows:

In existing technology, the beam management procedure is not explicitly indicated, but is implicitly indicated in some ways. For example, downlink beam management is implicitly indicated using the repetition parameter in the CSI-RS resource set in the RRC configuration and the TCI state in the CSI-RS resource. The repetition parameter indicates that all CSI-RS resources in the resource set use the same downlink spatial domain filter. Specifically, if the repetition parameter is set to 'off' and the TCI states of the CSI-RS resources are all different, P-1 is implicitly indicated; if the repetition parameter is set to 'on' and the TCI states of the CSI-RS resources are all the same, P-2 is implicitly indicated; if the repetition parameter is set to 'on' (in this case, the TCI states of the CSI-RS resources must be the same), P-3 is implicitly indicated.

Method 1: The UE reports one or more selected TCI states or spatial relations, and the setting of the repetition parameter, in the form of a bitmap on PUCCH or PUSCH. A part of the bits in the bitmap indicates whether the TCI state or spatial relation is selected, and another bit indicates whether the setting of the repetition parameter is 'off' or 'on', as shown in FIG. 30.

For a joint TCI state in a unified TCI framework, one bit is also needed in the bitmap to indicate downlink or uplink.

Method 2: The UE reports one or more selected TCI state IDs or spatial relation IDs, and the setting of the repetition parameter, on PUCCH or PUSCH. The number of bits for the TCI state or spatial relation ID, and the beam management procedure ID, is consistent with the related discussion above, as shown in the table below.

**Table 34**

| Field | Number of bits |
|---|---|
| TCI state or spatial relation ID #1 | $\left⌈{log}_{2}N\right⌉$ |
| TCI state or spatial relation ID #2 | $\left⌈{log}_{2}N\right⌉$ |
| ... | ... |
| TCI state or spatial relation ID #M | $\left⌈{log}_{2}N\right⌉$ |
| Setting of repetition parameter | 1 |

The field for the TCI state or spatial relation can also adopt the form of reporting a combination ID, as shown in Table 35.

**Table 35**

| Field | Number of bits |
|---|---|
| TCI state or spatial relation combination ID | $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$ |
| Setting of repetition parameter | 1 |

For a joint TCI state in a unified TCI framework, one bit is also needed in the bitmap to indicate downlink or uplink.

Method 3: The UE reports one or more selected spatial relations, and one or more beam management procedures, in the form of a MAC CE on PUSCH. The MAC CE contains at least one of the following fields: Cell ID, BWP ID, TCI state or spatial relation information, information on the setting of the repetition parameter. The number of bits in the MAC CE for indicating the TCI state or spatial relation information is consistent with the related discussion above. The number of bits for indicating the information on the setting of the repetition parameter is 1. For a joint TCI state in a unified TCI framework, one bit is also needed in the MAC CE to indicate downlink or uplink.

Specifically, if multiple TCI states or spatial relations are reported and the repetition parameter is set to 'off', it indicates that the UE is interested in the base station performing P-1 for the beams corresponding to these TCI states or spatial relations. If only one TCI state or spatial relation is reported and the repetition parameter is set to 'off', it indicates that the UE wants the base station to perform P-2 for the beam corresponding to this TCI state or spatial relation. If only one TCI state or spatial relation is reported and the repetition parameter is set to 'on', it indicates that the UE wants the base station to perform P-3 for the beam corresponding to this TCI state or spatial relation.

In some embodiments, the configuration information includes a list of CSI reporting configurations and a list of time offsets, the list of CSI reporting configurations includes one or more CSI reporting configurations, the list of time offsets includes one or more time offset values, and the beam-related information includes beam indication information and time offset information. The beam-related information indicates in at least one of the following ways: indicating one or more selected CSI reporting configurations and a time offset value to the network device in the form of a bitmap; indicating one or more selected CSI reporting configurations and a time offset value to the network device in the form of identifiers; indicating one or more selected CSI reporting configurations and a time offset value to the network device in the form of combined identifiers; and indicating one or more selected CSI reporting configurations and a time offset value to the network device via a MAC CE. Some bits in the bitmap correspond one-to-one with the CSI reporting configurations, and each of those bits indicates whether the corresponding CSI reporting configuration is selected. One identifier corresponds to one selected CSI reporting configuration. One combined identifier corresponds to one or more selected CSI reporting configurations. The MAC CE contains at least a field for the CSI reporting configuration and a field for the time offset value, wherein the number of bits of the field for the CSI reporting configuration is related to the number of CSI reporting configurations. This is detailed as follows:

The time offset is not reported alone, but needs to be reported simultaneously with one or more of: a CSI reporting configuration, a CSI-RS resource set, an SRS resource set, a TCI state, a spatial relation, a beam management procedure, or a repetition parameter. How to report is illustrated using the reporting of a CSI reporting configuration and a time offset as an example. If a CSI-RS resource set, an SRS resource set, a TCI state, a spatial relation, or a beam management procedure is reported, the CSI reporting configuration in the following can be replaced with the CSI-RS resource set, SRS resource set, TCI state, spatial relation, beam management procedure, or repetition parameter.

To further illustrate the method in the above embodiment, an exemplary method is detailed as follows:

### RRC Configuration:

The above-mentioned configuration information can be configured through RRC signaling. RRC configures a list of CSI reporting configurations. The list contains a number of CSI reporting configurations, assumed to be N.

Alternatively or additionally, RRC configures the number of CSI reporting configurations that can be reported, assumed to be M. When reporting in the form of a bitmap, M may not be configured. When reporting in other forms, if M is not configured, M defaults to 1.

RRC configures a list of time offsets. The list contains a number of time offset values, in units of symbols or slots, assumed to be N'.

### UE Reporting:

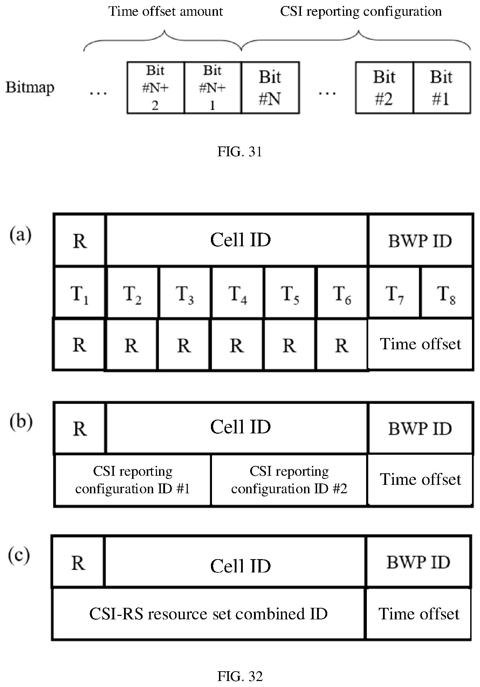

Method 1: The UE reports M selected CSI reporting configurations and one time offset value in the form of a bitmap on PUCCH or PUSCH. One part (N bits) of the bitmap indicates the selected CSI reporting configurations, and another part ( bits) indicates the time offset value, as shown in FIG. 31.

Method 2: The UE reports M selected CSI reporting configuration IDs and one time offset value on PUCCH or PUSCH, as shown in Table 36.

**Table 36**

| Field | Number of bits |
|---|---|
| CSI reporting configuration ID #1 | $\left⌈{log}_{2}N\right⌉$ |
| ... | ... |
| CSI reporting configuration ID #M | $\left⌈{log}_{2}N\right⌉$ |
| Time offset | $\left⌈{log}_{2}N′\right⌉$ |

Method 3: The UE reports one CSI reporting configuration combination ID and one time offset on the PUCCH or PUSCH. Each combination ID corresponds to M selected CSI reporting configurations, as shown in Table 2. The number of bits of the reported combination ID is equal to $\left⌈{log}_{2}N+\left(\begin{matrix}N \\ 2\end{matrix}\right)+\left(\begin{matrix}N \\ 3\end{matrix}\right)+⋯+\left(\begin{matrix}N \\ M\end{matrix}\right)-1\right⌉$, where $\left(\begin{matrix}N \\ M\end{matrix}\right) = \frac{N ∗ \left(N-1\right) ∗ … ∗ 1}{M ∗ \left(M-1\right) ∗ … ∗ 1}$ represents the number of combinations for selecting M items from N items. The number of bits of the time offset is equal to $\left⌈{log}_{2}N′\right⌉$.

Method 4: The UE reports N selected CSI reporting configurations and one time offset in the form of a MAC CE on the PUSCH. The MAC CE includes at least one of the following fields: a cell ID, a Bandwidth Part (BWP) ID, CSI reporting configuration information, and time offset information. FIG. 32 shows three designs of the MAC CE. The number of bits of the field indicating the CSI reporting configuration information in the MAC CE is consistent with the relevant description above.

In some embodiments, beam-related information is sent to a network device through uplink control information (UCI). A bit sequence of the UCI includes at least one of the following: bits of the beam-related information, hybrid automatic repeat request (HARQ) bits, scheduling request (SR) bits, and channel state information (CSI) bits. When no CSI report has two parts, the two parts comprising a first part and a second part, there is only one UCI bit sequence, and a mapping order of the bits of the beam-related information in the UCI bit sequence satisfies one of the following rules: the bits of the beam-related information are after the SR bits and before the CSI bits; and the bits of the beam-related information are after the CSI bits. When at least one CSI report has two parts, the UCI bit sequence includes a first UCI bit sequence and a second UCI bit sequence, and a mapping order of the bits of the beam-related information in the UCI bit sequence satisfies one of the following rules: the bits of the beam-related information are located in the first UCI bit sequence and are after the SR bits; the bits of the beam-related information are located in the first UCI bit sequence and are after the first part of the CSI bits; the bits of the beam-related information are located in the second UCI bit sequence and are before the second part of the CSI bits; and the bits of the beam-related information are located in the second UCI bit sequence and are after the second part of the CSI bits. This is detailed as follows:

In existing technologies, when UCI is transmitted on the PUCCH, the mapping order of the UCI bit sequence is: HARQ bits -> SR bits -> CSI bits. If no CSI report has two parts, there will be only one UCI bit sequence. If at least one CSI report has two parts, there will be two UCI bit sequences.

When beam-related information is transmitted on the PUCCH, it can be regarded as a new UCI type other than HARQ, SR, and CSI, which is named Beam-Related Information (BRI). Therefore, the UCI bit sequence transmitted on the PUCCH includes at least one of the following: HARQ bits, SR bits, CSI bits, and BRI bits. The position where the BRI bits are mapped to the UCI bit sequence then needs to be defined.

Example 1: No CSI report has two parts.

Method 1: The order of the UCI bit sequence is: HARQ bits -> SR bits -> BRI bits -> CSI bits, that is, the BRI bits are after the SR bits and before the CSI bits. This method allows the network device to obtain the BRI faster and perform the beam management procedure faster.

Method 2: The order of the UCI bit sequence is: HARQ bits -> SR bits -> CSI bits -> BRI bits, that is, the BRI bits are after the CSI bits. This method allows the network device to obtain the CSI faster and determine the downlink precoding faster.

Example 2: At least one CSI report has two parts, and the UCI bit sequence includes a first UCI bit sequence and a second UCI bit sequence.

Method 1: The order of the first UCI bit sequence is: HARQ bits -> SR bits -> BRI bits -> CSI-part1 bits, that is, the BRI bits are on the first UCI sequence, and are after the SR bits and before the CSI-part1 bits. The order of the second UCI bit sequence is: CSI-part2 bits. This method allows the network device to obtain the BRI faster and perform the beam management procedure faster.

Method 2: The order of the first UCI bit sequence is: HARQ bits -> SR bits -> CSI-part1 bits -> BRI bits, that is, the BRI bits are on the first UCI sequence and are after the CSI-part1 bits. The order of the second UCI bit sequence is: CSI-part2 bits. This method allows the network device to obtain CSI-part1 faster and demodulate CSI-part2 faster.

Method 3: The order of the first UCI bit sequence is: HARQ bits -> SR bits -> CSI-part1 bits. The order of the second UCI bit sequence is: BRI bits -> CSI-part2 bits, that is, the BRI bits are on the second UCI sequence and are before the CSI-part2 bits. This method can improve the demodulation performance of the first UCI bit sequence.

Method 4: The order of the first UCI bit sequence is: HARQ bits -> SR bits -> CSI-part1 bits. The order of the second UCI bit sequence is: CSI-part2 bits -> BRI bits, that is, the BRI bits are on the second UCI sequence and are after the CSI-part2 bits. This method can improve the demodulation performance of the first UCI bit sequence.

In addition, in existing technologies, when UCI is transmitted on the PUCCH, the length of the UCI bit sequence is calculated during rate matching as shown in Table 37.

**Table 37**

| UCI transmitted on PUCCH | Coded UCI | Value of E_{UCI} |
|---|---|---|
| HARQ-ACK | HARQ-ACK | *E_{UCI} = Eₜₒₜ* |
| HARQ-ACK, SR | HARQ-ACK, SR | *E_{UCI} = Eₜₒₜ* |
| CSI (CSI does not have two parts) | CSI | *E_{UCI} = Eₜₒₜ* |
| HARQ-ACK, CSI (CSI does not have two parts) | HARQ-ACK, CSI | *E_{UCI} = Eₜₒₜ* |
| HARQ-ACK, SR, CSI (CSI does not have two parts) | HARQ-ACK, SR,CSI | *E_{UCI} = Eₜₒₜ* |
| CSI (CSI with two parts) | CSI first part | ${E}_{UCI} = min \left({E}_{tot},\left⌈\left(\begin{matrix}{O}^{CSI - part 1} \\ + L\end{matrix}\right)/{R}_{UCI}^{max}/{Q}_{m}\right⌉⋅{Q}_{m}\right)$ |
| | CSI second part | ${E}_{UCI} = {E}_{tot} - min \left({E}_{tot}, \left⌈\left(\begin{matrix}{O}^{CSI - part 1} \\ + L\end{matrix}\right)/{R}_{UCI}^{max}/{Q}_{m}\right⌉⋅{Q}_{m}\right)$ |
| HARQ-ACK, CSI (CSI with two parts) | HARQ-ACK, CSI first part | ${E}_{UCI} = min \left({E}_{tot}, \left⌈\left(\begin{matrix}{O}^{ACK} + {O}^{CSI - part 1} \\ + L\end{matrix}\right)/{R}_{UCI}^{max}/{Q}_{m}\right⌉⋅{Q}_{m}\right)$ |
| | CSI second part | ${E}_{UCI} = {E}_{tot} - min \left({E}_{tot}, \left⌈\left(\begin{matrix}{O}^{ACK} + {O}^{CSI - part 1} \\ + L\end{matrix}\right)/{R}_{UCI}^{max}/{Q}_{m}\right⌉⋅{Q}_{m}\right)$ |
| HARQ-ACK, SR, CSI (CSI with two parts) | HARQ-ACK, SR, CSI first part | ${E}_{UCI} = min \left({E}_{tot}, \left⌈\left(\begin{matrix}{O}^{ACK} + {O}^{SR} + {O}^{CSI - part 1} \\ + L\end{matrix}\right)/{R}_{UCI}^{max}/{Q}_{m}\right⌉⋅{Q}_{m}\right)$ |
| | CSI second part | ${E}_{UCI} = {E}_{tot} - min \left({E}_{tot},\left⌈\left(\begin{matrix}{O}^{ACK} + {O}^{SR} \\ + {O}^{CSI - part 1} \\ + L\end{matrix}\right)/{R}_{UCI}^{max}/{Q}_{m}\right⌉⋅{Q}_{m}\right)$ |

In the above, *E_{UCI}* represents the UCI bit sequence length, *Eₜₒₜ* represents the bit sequence length after rate matching, *O^{ACK}* represents the number of HARQ bits, *O^{SR}* represents the number of SR bits, *O*^{*CSI-part*1} represents the number of bits of the first part of CSI, ${R}_{UCI}^{max}$ represents the code rate, *Qₘ* represents the modulation order, and L represents the number of bits for Cyclic Redundancy Check (CRC).

After a new Uplink Control Information (UCI) type, BRI, is introduced, when UCI is transmitted on a PUCCH, the calculation of the UCI bit sequence length during rate matching needs to account for the BRI bits.

Example 1: No Channel State Information (CSI) report has two parts. The calculation of the UCI bit sequence length is shown in Table 38.

**Table 38**

| UCI transmitted on PUCCH | Coded UCI | Value of E_{UCI} |
|---|---|---|
| BRI | BRI | *E_{UCI} = Eₜₒₜ* |
| HARQ-ACK, CSI, BRI (CSI does not have two parts) | HARQ-ACK, CSI, BRI | *E_{UCI} = Eₜₒₜ* |
| HARQ-ACK, SR, CSI, BRI (CSI does not have two parts) | HARQ-ACK, SR, CSI, BRI | *E_{UCI} = Eₜₒₜ* |

Example 2: At least one CSI report has two parts. The calculation of the UCI bit sequence length is shown in Table 39 and Table 40.

Method 1: The BRI is in the first UCI bit sequence. The calculation of the UCI bit sequence length is shown in Table 39.

**Table 39**

| UCI transmitted on PUCCH | Coded UCI | Value of E_{UCI} |
|---|---|---|
| CSI, BRI (CSI with two parts) | CSI part 1, BRI | ${E}_{UCI} = min \left({E}_{tot},\left⌈\left(\begin{matrix}{O}^{CSI - part 1} + {O}^{BPI} \\ + L\end{matrix}\right)/{R}_{UCI}^{max}/{Q}_{m}\right⌉⋅{Q}_{m}\right)$ |
| | CSI part 2 | ${E}_{UCI} = {E}_{tot} - min \left({E}_{tot}, \left⌈\left(\begin{matrix}{O}^{CSI - part 1} + {O}^{BPI} \\ + L\end{matrix}\right)/{R}_{UCI}^{max}/{Q}_{m}\right⌉⋅{Q}_{m}\right)$ |
| HARQ-ACK, CSI, BRI (CSI with two parts) | HARQ-ACK, CSI part 1, BRI | ${E}_{UCI} = min \left({E}_{tot}, \left⌈\left(\begin{matrix}{O}^{ACK} + {O}^{CSI - part 1} + {O}^{BPI} \\ + L\end{matrix}\right)/{R}_{UCI}^{max}/{Q}_{m}\right⌉⋅{Q}_{m}\right)$ |
| | CSI part 2 | ${E}_{UCI} = {E}_{tot} - min \left({E}_{tot},\left⌈\left(\begin{matrix}{O}^{ACK} + {O}^{CSI - part 1} + {O}^{BPI} \\ + L\end{matrix}\right)/{R}_{UCI}^{max}/{Q}_{m}\right⌉⋅{Q}_{m}\right)$ |
| HARQ-ACK, SR, CSI, BRI (CSI with two parts) | HARQ-ACK, SR, CSI part 1, BRI | ${E}_{UCI} = min \left({E}_{tot},\left⌈\left(\begin{matrix}{O}^{ACK} + {O}^{SR} + {O}^{CSI - part 1} + {O}^{BPI} \\ + L\end{matrix}\right)/{R}_{UCI}^{max}/{Q}_{m}\right⌉⋅{Q}_{m}\right)$ |
| | CSI part 2 | ${E}_{UCI} = {E}_{tot} - min \left({E}_{tot},\left⌈\left(\begin{matrix}{O}^{ACK} + {O}^{SR} + {O}^{CSI - part 1} \\ + {O}^{BPI} + L\end{matrix}\right)/{R}_{UCI}^{max}/{Q}_{m}\right⌉⋅{Q}_{m}\right)$ |

Method 2: The BRI is in the second UCI bit sequence. The calculation of the UCI bit sequence length is shown in Table 40.

**Table 40**

| UCI transmitted on PUCCH | Coded UCI | Value of E_{UCI} |
|---|---|---|
| CSI, BRI (CSI with | CSI part 1 | ${E}_{UCI} = min \left({E}_{tot},\left⌈\left({O}^{CSI - part 1}+L\right)/{R}_{UCI}^{max}/{Q}_{m}\right⌉⋅{Q}_{m}\right)$ |
| two parts) | CSI part 2, BRI | ${E}_{UCI} = {E}_{tot} - min \left({E}_{tot}, \left⌈\left(\begin{matrix}{O}^{CSI - part 1} \\ + L\end{matrix}\right)/{R}_{UCI}^{max}/{Q}_{m}\right⌉⋅{Q}_{m}\right)$ |
| HARQ-ACK, CSI, BRI (CSI with two parts) | HARQ-ACK, CSI part 1 | ${E}_{UCI} = min \left({E}_{tot}, \left⌈\left(\begin{matrix}{O}^{ACK} + {O}^{CSI - part 1} \\ + L\end{matrix}\right)/{R}_{UCI}^{max}/{Q}_{m}\right⌉⋅{Q}_{m}\right)$ |
| | CSI part 2, BRI | ${E}_{UCI} = {E}_{tot} - min \left({E}_{tot}, \left⌈\left(\begin{matrix}{O}^{ACK} + {O}^{CSI - part 1} \\ + L\end{matrix}\right)/{R}_{UCI}^{max}/{Q}_{m}\right⌉⋅{Q}_{m}\right)$ |
| HARQ-ACK, SR, CSI, BRI (CSI with two parts) | HARQ-ACK, SR, CSI part 1 | ${E}_{UCI} = min \left({E}_{tot}, \left⌈\left(\begin{matrix}{O}^{ACK} + {O}^{SR} + {O}^{CSI - part 1} \\ + L\end{matrix}\right)/{R}_{UCI}^{max}/{Q}_{m}\right⌉⋅{Q}_{m}\right)$ |
| | CSI part 2, BRI | ${E}_{UCI} = {E}_{tot} - min \left({E}_{tot},\left⌈\left(\begin{matrix}{O}^{ACK} + {O}^{SR} + {O}^{CSI - part 1} \\ + L\end{matrix}\right)/{R}_{UCI}^{max}/{Q}_{m}\right⌉⋅{Q}_{m}\right)$ |

*O^{BPI}* represents the number of bits of the BRI. These tables only show the parts containing BRI, and the remaining parts are the same as in the prior art.

In some embodiments, when a PUCCH resource carrying an SR overlaps with a PUCCH resource carrying beam-related information, the SR is multiplexed onto the PUCCH resource carrying the beam-related information. In other embodiments, when a PUCCH resource carrying beam-related information overlaps with a PUCCH resource carrying at least one of HARQ, an SR, and CSI, a PUCCH resource is selected from the overlapping PUCCH resources to transmit at least one of the beam-related information, HARQ, the SR, and the CSI. This is detailed as follows:

### Multiplexing of PUCCH for BRI and PUCCH for SR:

The number of bits of the BRI is *O_{BRI}* (usually greater than 2 bits) and is carried by PUCCH format 2/3/4. The SR is carried by PUCCH format 1. When a PUCCH resource carrying K SRs overlaps with a PUCCH resource carrying BRI, the SR is multiplexed onto the PUCCH resource for the beam-related information. The total number of bits for these two types of UCI is ${O}_{UCI} = \left⌈{log}_{2}\left(K+1\right)\right⌉ + {O}_{BPI}$*.*

### Multiplexing of BRI with HARQ (if exists), SR (if exists), and CSI (if exists):

When different PUCCH resources that respectively carry BRI, HARQ (if exists), SR (if exists), and CSI (if exists) overlap, a set of these PUCCH resources is first obtained according to the resource selection rules in the prior art. Then, a PUCCH for transmission is selected from the set of PUCCH resources based on the sum of the number of bits of BRI, HARQ (if exists), SR (if exists), CSI (if exists), and CRC. For example, when different PUCCH resources that respectively carry BRI and SR overlap, the SR is multiplexed onto the PUCCH resource carrying the BRI.

In some embodiments, the calculation or allocation of coded modulation symbols is performed according to one of the following orders: HARQ, beam-related information, CSI part 1, CSI part 2; HARQ, CSI part 1, beam-related information, CSI part 2; and HARQ, CSI part 1, CSI part 2, beam-related information. This is detailed as follows:

In the prior art, when UCI is transmitted on a PUSCH, the calculation/allocation order of coded modulation symbols during rate matching is: HARQ -> CSI -> part1 -> CSI-part2.

Number of coded modulation symbols for HARQ: ${Q}_{ACK}^{′} = min \left\{\left⌈\frac{\left({O}_{ACK}+{L}_{ACK}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉, \left⌈α⋅{\sum }_{l = {l}_{0}}^{{N}_{symb , all}^{PUSCH} - 1} {M}_{sc}^{UCI} \left(l\right)\right⌉\right\}$

*O_{ACK}* represents the number of HARQ bits, *L_{ACK}* represents the number of CRC check bits of HARQ, *Kᵣ* represents the size of the r-th code block of the PUSCH, *C_{UL-SCH}* represents the number of code blocks of the PUSCH, ${M}_{SC}^{UCI}$ represents the bandwidth of the PUSCH (in units of a number of subcarriers), ${M}_{SC}^{UCI} \left(l\right)$ represents the number of REs used for transmitting UCI on the 1-th symbol, ${N}_{symb , all}^{PUSCH}$ represents the total number of symbols of the PUSCH (including DMRS symbols),*l*₀ represents a first symbol after a first DMRS symbol of the PUSCH, α is configured by a higher-layer parameter, and ${β}_{offset}^{PUSCH} = {β}_{offset}^{HARQ}$ is configured by a higher-layer parameter or dynamically indicated.

Number of coded modulation symbols for Channel State Information (CSI)-part1: ${Q}_{CSI - 1}^{′} = min \left\{\begin{matrix}\left⌈\frac{\left({O}_{CSI - 1}+{L}_{CSI - 1}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉ , \left⌈α⋅{\sum }_{l = 0}^{{N}_{symb , all}^{PUSCH} - 1} {M}_{sc}^{UCI} \left(l\right)\right⌉ \\ - {Q}_{ACK / CG - UCI}^{′}\end{matrix}\right\}$

*O*_{CSI-1} represents the number of bits of CSI-part1, L_{CSI-1} represents the number of CRC check bits of CSI-part1, *Kᵣ* represents the size of the r-th code block of the PUSCH, *C_{UL-SCH}* represents the number of code blocks of the PUSCH, ${M}_{sc}^{UCI}$ represents the bandwidth of the PUSCH (in units of a number of subcarriers), ${M}_{SC}^{UCI} \left(l\right)$ represents the number of REs used for transmitting UCI on the 1-th symbol, ${N}_{symb , all}^{PUSCH}$ represents the total number of symbols of the PUSCH (including DMRS symbols), α is confired by a higher-layer parameter, and ${β}_{offset}^{PUSCH} = {β}_{offset}^{CSI - 1}$ is configured by a higher-layer parameter or dynamically indicated. If there is no CG-UCI, ${Q}_{ACK / CG - UCI}^{′} = {Q}_{ACK}^{′}$.

Number of coded modulation symbols for CSI-part2: ${Q}_{CSI - 2}^{′} = min \left\{\begin{matrix}\left⌈\frac{\left({O}_{CSI - 2}+{L}_{CSI - 2}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉ , \left⌈α⋅{\sum }_{l = 0}^{{N}_{symb , all}^{PUSCH} - 1} {M}_{sc}^{UCI} \left(l\right)\right⌉ \\ - {Q}_{ACK / CG - UCI}^{′} - {Q}_{CSI - 1}^{′}\end{matrix}\right\}$

*O*_{CSI-2} represents the number of bits of CSI-part2, *L*_{CSI-2} represents the number of CRC check bits of CSI-part2, *Kᵣ* represents the size of the r-th code block of the PUSCH, *C_{UL-SCH}* represents the number of code blocks of the PUSCH, ${M}_{sc}^{UCI}$ represents the bandwidth of the PUSCH (in units of a number of subcarriers), ${M}_{SC}^{UCI} \left(l\right)$ represents the number of REs used for transmitting UCI on the 1-th symbol, ${N}_{symb , all}^{PUSCH}$ represents the total number of symbols of the PUSCH (including DMRS symbols), α is configured by a higher-layer parameter, and ${β}_{offset}^{PUSCH} = {β}_{offset}^{CSI - 2}$ is configured by a higher-layer parameter or dynamically indicated. If there is no CG-UCI, ${Q}_{ACK / CG - UCI}^{′} = {Q}_{ACK}^{′}$*.*

After a new UCI type BRI is added, when UCI is transmitted on a PUSCH, during rate matching, the calculation/allocation of the number of coded modulation symbols needs to take BRI bits into account.

### Mode 1:

The calculation/allocation order of coded modulation symbols is: HARQ->BRI->CSI-part1->CSI-part2.

The number of coded modulation symbols for HARQ remains unchanged.

The number of coded modulation symbols for BRI is: ${Q}_{BPI}^{′} = min \left\{\begin{matrix}\left⌈\frac{\left({O}_{BPI}+{L}_{BPI}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉ , \left⌈α⋅{\sum }_{l = 0}^{{N}_{symb , all}^{PUSCH} - 1} {M}_{sc}^{UCI} \left(l\right)\right⌉ \\ - {Q}_{ACK / CG - UCI}^{′}\end{matrix}\right\}$

*O_{BPI}* represents the number of BRI bits, and*L_{BPI}* represents the number of CRC check bits of BRI.

The number of coded modulation symbols for CSI-part1 is: ${Q}_{CSI - 1}^{′} = min \left\{\begin{matrix}\left⌈\frac{\left({O}_{CSI - 1}+{L}_{CSI - 1}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉ , \left⌈α⋅{\sum }_{l = 0}^{{N}_{symb , all}^{PUSCH} - 1} {M}_{sc}^{UCI} \left(l\right)\right⌉ \\ - {Q}_{ACK / CG - UCI}^{′} - {Q}_{BPI}^{′}\end{matrix}\right\}$

The number of coded modulation symbols for CSI-part2 is: ${Q}_{CSI - 2}^{′} = min \left\{\begin{matrix}\left⌈\frac{\left({O}_{CSI - 2}+{L}_{CSI - 2}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉ , \left⌈α⋅{\sum }_{l = 0}^{{N}_{symb , all}^{PUSCH} - 1} {M}_{sc}^{UCI} \left(l\right)\right⌉ \\ - {Q}_{ACK / CG - UCI}^{′} - {Q}_{BPI}^{′} - {Q}_{CSI - 1}^{′}\end{matrix}\right\}$

### Mode 2:

The calculation/allocation order of coded modulation symbols is: HARQ->CSI-part1->BRI->CSI-part2.

The numbers of coded modulation symbols for HARQ and CSI-part1 remain unchanged.

The number of coded modulation symbols for BRI is: ${Q}_{BPI}^{′} = min \left\{\begin{matrix}\left⌈\frac{\left({O}_{BPI}+{L}_{BPI}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉ , \left⌈α⋅{\sum }_{l = 0}^{{N}_{symb , all}^{PUSCH} - 1} {M}_{sc}^{UCI} \left(l\right)\right⌉ - {Q}_{ACK / CG - UCI}^{′} \\ - {Q}_{CSI - 1}^{′}\end{matrix}\right\}$

*O_{BPI}* represents the number of BRI bits, and *L_{BPI}* represents the number of CRC check bits of BRI.

The number of coded modulation symbols for CSI-part2 is: ${Q}_{CSI - 2}^{′} = min \left\{\begin{matrix}\left⌈\frac{\left({O}_{CSI - 2}+{L}_{CSI - 2}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉ , \left⌈α⋅{\sum }_{l = 0}^{{N}_{symb , all}^{PUSCH} - 1} {M}_{sc}^{UCI} \left(l\right)\right⌉ \\ - {Q}_{ACK / CG - UCI}^{′} - {Q}_{CSI - 1}^{′} - {Q}_{BPI}^{′}\end{matrix}\right\}$

### Mode 3:

The calculation/allocation order of coded modulation symbols is: HARQ->CSI-part1->CSI-part2->BRI.

The numbers of coded modulation symbols for HARQ, CSI-part1, and CSI-part2 remain unchanged.

The number of coded modulation symbols for BRI is: ${Q}_{BPI}^{′} = min \left\{\begin{matrix}\left⌈\frac{\left({O}_{BPI}+{L}_{BPI}\right) ⋅ {β}_{offset}^{PUSCH} ⋅ {\sum }_{l = 0}^{{N}_{symb , all}^{PUSCH} - 1} {M}_{sc}^{UCI} \left(l\right)}{{\sum }_{r = 0}^{{C}_{UL - SCH} - 1} {K}_{r}}\right⌉ , \left⌈α⋅{\sum }_{l = 0}^{{N}_{symb , all}^{PUSCH} - 1} {M}_{sc}^{UCI} \left(l\right)\right⌉ - {Q}_{ACK / CG - UCI}^{′} \\ - {Q}_{CSI - 1}^{′} - {Q}_{CSI - 2}^{′}\end{matrix}\right\}$

*O_{BPI}* represents the number of BRI bits, and *L_{BPI}* represents the number of CRC check bits of BRI.

In some embodiments, resource mapping is performed according to one of the following rules: mapping in sequence, starting from a first non-DMRS symbol of a PUSCH, bits of the beam-related information, a first part of CSI bits, and a second part of CSI bits; mapping in sequence, starting from a first non-DMRS symbol of a PUSCH, a first part of CSI bits, bits of the beam-related information, and a second part of CSI bits; and mapping in sequence, starting from a first non-DMRS symbol of a PUSCH, a first part of CSI bits, a second part of CSI bits, and bits of the beam-related information. This is detailed as follows:

In the prior art, when UCI is transmitted on a PUSCH, during resource mapping, HARQ bits are mapped to part of the resources on the first symbol after the first DMRS of the PUSCH; CSI-part1 bits are mapped starting from the first non-DMRS symbol of the PUSCH; after the CSI-part1 bits are mapped, the CSI-part2 bits are then mapped; the mapping of CSI-part1 and CSI-part2 bits skips DMRS symbols.

After the new UCI type, BRI, is added, when UCI is transmitted on the PUSCH, resource mapping needs to consider BRI.

Method 1: HARQ bits are mapped to a portion of resources on the first symbol following the first DMRS of the PUSCH. Starting from the first non-DMRS symbol of the PUSCH, BRI bits are mapped, followed by CSI-part1 bits, and then CSI-part2 bits. The mapping of BRI, CSI-part1, and CSI-part2 bits skips DMRS symbols. This method allows a base station to obtain the BRI faster and accelerate the beam management procedure.

Method 2: HARQ bits are mapped to a portion of resources on the first symbol following the first DMRS of the PUSCH. Starting from the first non-DMRS symbol of the PUSCH, CSI-part1 bits are mapped, followed by BRI bits, and then CSI-part2 bits. The mapping of BRI, CSI-part1, and CSI-part2 bits skips DMRS symbols. This method allows a base station to obtain CSI-part1 faster and accelerate the preparation for downlink precoding.

Method 3: HARQ bits are mapped to a portion of resources on the first symbol following the first DMRS of the PUSCH. Starting from the first non-DMRS symbol of the PUSCH, CSI-part1 bits are mapped, followed by CSI-part2 bits, and then BRI bits. The mapping of BRI, CSI-part1, and CSI-part2 bits skips DMRS symbols. This method allows a base station to obtain CSI-part1 and CSI-part2 faster and accelerate the determination of downlink precoding.

An embodiment of the present disclosure also provides a terminal device, comprising a memory and a processor. The memory stores a computer program, and the computer program, when executed by the processor, implements the steps in any of the method embodiments described above.

An embodiment of the present disclosure also provides a network device, comprising a memory and a processor. The memory stores a computer program, and the computer program, when executed by the processor, implements the steps in any of the method embodiments described above.

An embodiment of the present disclosure also provides a non-volatile storage medium. The storage medium stores a computer program, and the computer program, when executed by a computer, implements the steps in any of the method embodiments described above.

The embodiments of the terminal device, network device, and storage medium provided in the embodiments of the present disclosure may include all the technical features of any of the method embodiments described above. The extended descriptions and explanations thereof are substantially the same as those for the various method embodiments and are not repeated herein.

An embodiment of the present disclosure also provides a computer program product. The computer program product comprises computer program code, and when the computer program code is run on a computer, it causes the computer to execute the methods in the various possible implementations as described above.

An embodiment of the present disclosure also provides a chip, comprising a memory and a processor. The memory is configured to store a computer program, and the processor is configured to call and run the computer program from the memory, causing a device equipped with the chip to execute the methods in the various possible implementations as described above.

It should be understood that the foregoing scenarios are merely examples and do not constitute a limitation on the application scenarios of the technical solutions provided by the embodiments of the present disclosure. The technical solutions of the embodiments of the present disclosure may also be applied to other scenarios. For example, a person of ordinary skill in the art would know that as system architectures evolve and new service scenarios emerge, the technical solutions provided by the embodiments of the present disclosure are also applicable to similar technical problems.

The numbering of the foregoing embodiments of the present disclosure is for descriptive purposes only and does not indicate any preference among the embodiments.

The steps in the method embodiments of the present disclosure may be adjusted in order, combined, or omitted according to actual needs.

The units in the apparatus embodiments of the present disclosure may be combined, divided, or omitted according to actual needs.

In the embodiments of the present disclosure, for the same or similar terms, concepts, technical solutions, and/or application scenario descriptions, a detailed description is generally provided only upon their first appearance. For the sake of brevity, they are generally not repeated thereafter. When understanding the technical solutions and other content of the embodiments of the present disclosure, reference may be made to their previous relevant detailed descriptions for any such terms, concepts, technical solutions, and/or application scenario descriptions that are not described in detail later.

In the embodiments of the present disclosure, the descriptions of the various embodiments each have their own focus. For parts that are not detailed or described in a particular embodiment, reference may be made to the relevant descriptions in other embodiments.

The various technical features of the technical solutions in the embodiments of the present disclosure may be arbitrarily combined. To keep the description concise, not all possible combinations of the various technical features in the foregoing embodiments have been described. However, as long as a combination of these technical features does not create a contradiction, it shall be considered to be within the scope of the present disclosure.

Based on the foregoing descriptions of the embodiments, a person skilled in the art can clearly understand that the methods of the above embodiments may be implemented by means of software in combination with a necessary general-purpose hardware platform. Alternatively, they may be implemented by hardware, but in many cases, the former is a preferred implementation. Based on this understanding, the technical solutions of the embodiments of the present disclosure, or the part thereof that contributes to the prior art, may be embodied in the form of a software product. The computer software product is stored in a storage medium (such as a ROM/RAM, a magnetic disk, or an optical disc) as described above, and includes several instructions to cause a terminal device (which may be a mobile phone, a computer, a server, a controlled terminal, or a network device, etc.) to execute the methods of the embodiments of the present disclosure.

In the foregoing embodiments, all or part of the functions may be implemented by software, hardware, firmware, or any combination thereof. When implemented by software, they may be implemented entirely or partially in the form of a computer program product. The computer program product includes one or more computer instructions. When the computer program instructions are loaded and executed on a computer, the processes or functions according to the embodiments of the present disclosure are generated in whole or in part. The computer may be a general-purpose computer, a special-purpose computer, a computer network, or another programmable apparatus. The computer instructions may be stored in a storage medium or transmitted from one storage medium to another. For example, the computer instructions may be transmitted from a website, computer, server, or data center to another website, computer, server, or data center via a wired connection (e.g., a coaxial cable, an optical fiber, or a Digital Subscriber Line (DSL)) or a wireless connection (e.g., infrared, radio, or microwave). The storage medium may be any available medium that can be accessed by a computer, or a data storage device such as a server or data center that integrates one or more available media. The available medium may be a magnetic medium (e.g., a floppy disk, a hard disk, or a magnetic tape), an optical medium (e.g., a DVD), or a semiconductor medium (e.g., a Solid-State Disk (SSD)).

The foregoing descriptions are merely specific embodiments of the present disclosure and are not intended to limit the scope of patent protection of the present disclosure. Any equivalent structural or process transformations made based on the specification and accompanying drawings of the present disclosure, or any direct or indirect application thereof in other related technical fields, are likewise included within the scope of patent protection of the present disclosure.

## Claims

1. An information indication method, performed by a terminal device, comprising:
receiving configuration information from a network device, wherein the configuration information comprises at least one of the following: a resource for reporting beam-related information, a beam management procedure, a beam indication-related configuration, and a time offset-related configuration; and
reporting beam-related information in response to the configuration information, wherein the beam-related information comprises at least one of the following: beam indication information, beam management procedure information, and time offset information.

2. The method according to claim 1, further comprising:
detecting a signal quality of a link, and predicting the beam-related information when the signal quality is lower than a threshold; and/or
detecting a state of the terminal device, and predicting the beam-related information when the state is in motion.

3. The method according to claim 1 or 2, further comprising:
receiving a scheduled reference signal, wherein the reference signal is included in the beam-related information.

4. The method according to claim 1, wherein the beam indication information comprises at least one of the following:
a Channel State Information, CSI, reporting configuration;
a Channel State Information-Reference Signal,CSI-RS, resource set;
a Sounding Reference Signal, SRS, resource set;
a Transmission Configuration Indication, TCI, state; and
a spatial relation.

5. The method according to claim 1, wherein the beam management procedure is configured by Radio Resource Control, RRC, or is predefined.

6. The method according to claim 1, wherein a configuration or information of the beam management procedure indicates at least one of the following:
a downlink beam sweeping procedure; and
an uplink beam sweeping procedure.

7. The method according to claim 6, wherein the downlink beam sweeping procedure comprises at least one of the following:
the network device using different beams for transmission, and the terminal device using different beams for reception;
the network device using different beams for transmission, and the terminal device using a same beam for reception; and
the network device using a same beam for transmission, and the terminal device using different beams for reception.

8. The method according to claim 6, wherein the uplink beam sweeping procedure comprises at least one of the following:
the terminal device using different beams for transmission, and the network device using different beams for reception;
the terminal device using different beams for transmission, and the network device using a same beam for reception; and
the terminal device using a same beam for transmission, and the network device using different beams for reception.

9. The method according to claim 1, wherein a start point of the time offset information is a time at which the terminal device reports the beam-related information.

10. The method according to claim 1, wherein the configuration information comprises a CSI reporting configuration list, the CSI reporting configuration list comprises one or more CSI reporting configurations, and the beam indication information indicates one or more selected CSI reporting configurations in at least one of the following ways:
indicating one or more selected CSI reporting configurations to the network device in a form of a bitmap;
indicating the one or more selected CSI reporting configurations to the network device in a form of identifiers;
indicating the one or more selected CSI reporting configurations to the network device in a form of combined identifiers; or
indicating the one or more selected CSI reporting configurations to the network device through a Medium Access Control Control Element, MAC CE.

11. The method according to claim 10, wherein bits in the bitmap correspond one-to-one to the CSI reporting configurations, a total number of bits of the bitmap corresponds to a number of the CSI reporting configurations, and each bit in the bitmap indicates whether a corresponding CSI reporting configuration is selected.

12. The method according to claim 10, wherein an identifier corresponds to one selected CSI reporting configuration.

13. The method according to claim 10, wherein a combined identifier corresponds to one or more selected CSI reporting configurations.

14. The method according to claim 10, wherein the MAC CE comprises at least a region for the CSI reporting configurations, and a number of bits of the region for the CSI reporting configurations is related to the number of the CSI reporting configurations.

15. The method according to claim 1, wherein the configuration information comprises a CSI-RS resource set list, the CSI-RS resource set list comprises one or more CSI-RS resource sets, and the beam indication information indicates one or more selected CSI-RS resource sets in at least one of the following ways:
indicating one or more selected CSI-RS resource sets to the network device in a form of a bitmap;
indicating the one or more selected CSI-RS resource sets to the network device in a form of identifiers;
indicating the one or more selected CSI-RS resource sets to the network device in a form of combined identifiers; or
indicating the one or more selected CSI-RS resource sets to the network device through a MAC CE.

16. The method according to claim 15, wherein bits in the bitmap correspond one-to-one to the CSI-RS resource sets, a total number of bits of the bitmap corresponds to a number of the CSI-RS resource sets, and each bit in the bitmap indicates whether a corresponding CSI-RS resource set is selected.

17. The method according to claim 15, wherein an identifier corresponds to one selected CSI-RS resource set.

18. The method according to claim 15, wherein a combined identifier corresponds to one or more selected CSI-RS resource sets.

19. The method according to claim 15, wherein the MAC CE comprises at least a region for the CSI-RS resource sets, and a number of bits of the region for the CSI-RS resource sets is related to the number of the CSI-RS resource sets.

20. The method according to claim 1, wherein the configuration information comprises an SRS resource set list, the SRS resource set list comprises one or more SRS resource sets, and the beam indication information indicates one or more selected SRS resource sets in at least one of the following ways:
indicating one or more selected SRS resource sets to the network device in a form of a bitmap;
indicating the one or more selected SRS resource sets to the network device in a form of identifiers;
indicating the one or more selected SRS resource sets to the network device in a form of combined identifiers; or
indicating the one or more selected SRS resource sets to the network device through a MAC CE.

21. The method according to claim 20, wherein bits in the bitmap correspond one-to-one to the SRS resource sets, a total number of bits of the bitmap corresponds to a number of the SRS resource sets, and each bit in the bitmap indicates whether a corresponding SRS resource set is selected.

22. The method according to claim 20, wherein an identifier corresponds to one selected SRS resource set.

23. The method according to claim 20, wherein a combined identifier corresponds to one or more selected SRS resource sets.

24. The method according to claim 20, wherein the MAC CE comprises at least a region for the SRS resource sets, and a number of bits of the region for the SRS resource sets is related to the number of the SRS resource sets.

25. The method according to claim 1, wherein the configuration information comprises a TCI state list, the TCI state list comprises one or more TCI states, and the beam indication information indicates one or more selected TCI states in at least one of the following ways:
indicating one or more selected TCI states to the network device in a form of a bitmap;
indicating the one or more selected TCI states to the network device in a form of identifiers;
indicating the one or more selected TCI states to the network device in a form of combined identifiers; or
indicating the one or more selected TCI states to the network device through a MAC CE.

26. The method according to claim 25, wherein bits in the bitmap correspond one-to-one to the TCI states, a total number of bits of the bitmap corresponds to a number of the TCI states, and each bit in the bitmap indicates whether a corresponding TCI state is selected.

27. The method according to claim 25, wherein an identifier corresponds to one selected TCI state.

28. The method according to claim 25, wherein a combined identifier corresponds to one or more selected TCI states.

29. The method according to claim 25, wherein the MAC CE comprises at least a region for the TCI states, and a number of bits of the region for the TCI states is related to the number of the TCI states.

30. The method according to claim 1, wherein the configuration information comprises a spatial relation list, the spatial relation list comprises one or more spatial relations, and the beam indication information indicates one or more selected spatial relations in at least one of the following ways:
indicating one or more selected spatial relations to the network device in a form of a bitmap;
indicating the one or more selected spatial relations to the network device in a form of identifiers;
indicating the one or more selected spatial relations to the network device in a form of combined identifiers; or
indicating the one or more selected spatial relations to the network device through a MAC CE.

31. The method according to claim 30, wherein bits in the bitmap correspond one-to-one to the spatial relations, a total number of bits of the bitmap corresponds to a number of the spatial relations, and each bit in the bitmap indicates whether a corresponding spatial relation is selected.

32. The method according to claim 30, wherein an identifier corresponds to one selected spatial relation.

33. The method according to claim 30, wherein a combined identifier corresponds to one or more selected spatial relations.

34. The method according to claim 30, wherein the MAC CE comprises at least a region for the spatial relations, and a number of bits of the region for the spatial relations is related to the number of the spatial relations.

35. The method according to any one of claims 1 and 5 to 8, wherein the beam management procedure indicates one or more selected beam management procedures in at least one of the following ways:
indicating one or more selected beam management procedures to the network device in a form of a bitmap;
indicating the one or more selected beam management procedures to the network device in a form of identifiers;
indicating the one or more selected beam management procedures to the network device in a form of combined identifiers; or
indicating the one or more selected beam management procedures to the network device through a MAC CE.

36. The method according to claim 35, wherein bits in the bitmap correspond one-to-one to the beam management procedures, a total number of bits of the bitmap corresponds to a number of the beam management procedures, and each bit in the bitmap indicates whether a corresponding beam management procedure is selected.

37. The method according to claim 35, wherein an identifier corresponds to one selected beam management procedure.

38. The method according to claim 35, wherein a combined identifier corresponds to one or more selected beam management procedures.

39. The method according to claim 35, wherein the MAC CE comprises at least a region for the beam management procedures, wherein a number of bits of the region for the beam management procedures is related to the number of the beam management procedures.

40. The method according to any one of claims 1 and 5 to 8, wherein the configuration information comprises a TCI state list, the TCI state list comprises one or more TCI states, and the beam-related information comprises the beam indication information and information of the beam management procedure, and the beam-related information indicates in at least one of the following ways:
indicating one or more selected TCI states and one or more selected beam management procedures to the network device in a form of a bitmap;
indicating the one or more selected TCI states and the one or more selected beam management procedures to the network device in a form of identifiers;
indicating the one or more selected TCI states and the one or more selected beam management procedures to the network device in a form of combined identifiers; or
indicating the one or more selected TCI states and the one or more selected beam management procedures to the network device through a MAC CE.

41. The method according to claim 40, wherein some bits in the bitmap correspond one-to-one to the TCI states, other bits in the bitmap correspond one-to-one to the beam management procedures, a total number of bits of the bitmap corresponds to a number of the TCI states and the beam management procedures, and each bit in the bitmap indicates whether a corresponding TCI state or a corresponding beam management procedure is selected.

42. The method according to claim 40, wherein an identifier corresponds to one selected TCI state or one selected beam management procedure.

43. The method according to claim 40, wherein a combined identifier corresponds to one or more selected TCI states or one or more selected beam management procedures.

44. The method according to claim 40, wherein the MAC CE comprises at least a region for the TCI states and a region for the beam management procedures, wherein a number of bits of the region for the TCI states is related to the number of the TCI states, and a number of bits of the region for the beam management procedures is related to the number of the beam management procedures.

45. The method according to any one of claims 1 and 5 to 8, wherein the configuration information comprises a spatial relation list, the spatial relation list comprises one or more spatial relations, and the beam-related information comprises the beam indication information and information of the beam management procedure, and the beam-related information indicates in at least one of the following ways:
indicating one or more selected spatial relations and one or more selected beam management procedures to the network device in a form of a bitmap;
indicating the one or more selected spatial relations and the one or more selected beam management procedures to the network device in a form of identifiers;
indicating the one or more selected spatial relations and the one or more selected beam management procedures to the network device in a form of combined identifiers; or
indicating the one or more selected spatial relations and the one or more selected beam management procedures to the network device through a MAC CE.

46. The method according to claim 45, wherein some bits in the bitmap correspond one-to-one to the spatial relations, other bits in the bitmap correspond one-to-one to the beam management procedures, a total number of bits of the bitmap corresponds to the number of the spatial relations and the beam management procedures, and each bit in the bitmap indicates whether a corresponding spatial relation or a corresponding beam management procedure is selected.

47. The method according to claim 45, wherein an identifier corresponds to one selected spatial relation or one selected beam management procedure.

48. The method according to claim 45, wherein a combined identifier corresponds to one or more selected spatial relations or one or more selected beam management procedures.

49. The method according to claim 45, wherein the Medium Access Control Control Element, MAC CE, comprises at least a region for the spatial relations and a region for the beam management procedures, wherein a number of bits of the region for the spatial relations is related to the number of the spatial relations, and a number of bits of the region for the beam management procedures is related to the number of the beam management procedures.

50. The method according to claim 1, wherein the configuration information comprises a TCI state list, the TCI state list comprises one or more TCI states, and the beam-related information comprises the beam indication information and a preset parameter, and the beam-related information indicates in at least one of the following ways:
indicating one or more selected TCI states and the preset parameter to the network device in a form of a bitmap;
indicating the one or more selected TCI states and the preset parameter to the network device in a form of identifiers;
indicating the one or more selected TCI states and the preset parameter to the network device in a form of combined identifiers; or
indicating the one or more selected TCI states and the preset parameter to the network device through a MAC CE.

51. The method according to claim 50, wherein the preset parameter indicates that a plurality of reference signals use a same downlink spatial domain filter.

52. The method according to claim 50, wherein some bits in the bitmap correspond one-to-one to the TCI states, and each of said bits in the bitmap indicates whether a corresponding TCI state is selected.

53. The method according to claim 50, wherein an identifier corresponds to one selected TCI state.

54. The method according to claim 50, wherein a combined identifier corresponds to one or more selected TCI states.

55. The method according to claim 50, wherein the MAC CE comprises at least a region for the TCI states and a region for the preset parameter, wherein a number of bits of the region for the TCI states is related to the number of the TCI states.

56. The method according to claim 1, wherein the configuration information comprises a CSI reporting configuration list and a time offset list, the CSI reporting configuration list comprises one or more CSI reporting configurations, the time offset list comprises one or more time offset amounts, and the beam-related information comprises the beam indication information and the time offset information, and the beam indication information indicates in at least one of the following ways:
indicating one or more selected CSI reporting configurations and the one or more time offset amounts to the network device in a form of a bitmap;
indicating the one or more selected CSI reporting configurations and the one or more time offset amounts to the network device in a form of identifiers;
indicating the one or more selected CSI reporting configurations and the one or more time offset amounts to the network device in a form of combined identifiers; or
indicating the one or more selected CSI reporting configurations and the one or more time offset amounts to the network device through a MAC CE.

57. The method according to claim 56, wherein some bits in the bitmap correspond one-to-one to the CSI reporting configurations, and each of said bits in the bitmap indicates whether a corresponding CSI reporting configuration is selected.

58. The method according to claim 56, wherein an identifier corresponds to one selected CSI reporting configuration.

59. The method according to claim 56, wherein a combined identifier corresponds to one or more selected CSI reporting configurations.

60. The method according to claim 56, wherein the MAC CE comprises at least a region for the CSI reporting configurations and a region for the time offset amounts, wherein a number of bits of the region for the CSI reporting configurations is related to the number of the CSI reporting configurations.

61. The method according to claim 1, wherein the beam-related information is sent to the network device through Uplink Control Information, UCI, a bit sequence of the UCI comprises at least one of the following: bits of the beam-related information, Hybrid Automatic Repeat Request, HARQ, bits, Scheduling Request, SR, bits, and CSI bits;
wherein when no CSI report has two parts, the two parts comprising a first part and a second part, there is only one bit sequence of the UCI, and a mapping order of the bits of the beam-related information in the bit sequence of the UCI satisfies one of the following rules:
the bits of the beam-related information are after the SR bits and before the CSI bits; and
the bits of the beam-related information are after the CSI bits;
when at least one CSI report has two parts, the bit sequence of the UCI comprises a first UCI bit sequence and a second UCI bit sequence, and a mapping order of the bits of the beam-related information in the bit sequence of the UCI satisfies one of the following rules:
the bits of the beam-related information are located in the first UCI bit sequence and are after the SR bits;
the bits of the beam-related information are located in the first UCI bit sequence and are after the first part of the CSI bits;
the bits of the beam-related information are located in the second UCI bit sequence and are before the second part of the CSI bits; and
the bits of the beam-related information are located in the second UCI bit sequence and are after the second part of the CSI bits.

62. The method according to claim 1, wherein when a PUCCH resource carrying an SR overlaps with a PUCCH resource carrying the beam-related information, the SR is multiplexed onto the PUCCH resource carrying the beam-related information.

63. The method according to claim 1, wherein when a PUCCH resource carrying the beam-related information overlaps with a PUCCH resource carrying at least one of HARQ, an SR, and CSI, a PUCCH resource is selected from overlapping PUCCH resources to transmit at least one of the beam-related information, the HARQ, the SR, and the CSI.

64. The method according to claim 1, wherein calculation or allocation of coded modulation symbols is performed according to an order of one of the following:
HARQ, the beam-related information, a first part of CSI, a second part of CSI;
HARQ, a first part of CSI, the beam-related information, a second part of CSI; and
HARQ, a first part of CSI, a second part of CSI, the beam-related information.

65. The method according to claim 1, wherein resource mapping is performed according to one of the following rules:
mapping, in sequence, bits of the beam-related information, a first part of CSI bits, and a second part of CSI bits, starting from a first non- DMRS symbol of a PUSCH;
mapping, in sequence, a first part of CSI bits, bits of the beam-related information, and a second part of CSI bits, starting from a first non-DMRS symbol of a PUSCH; and
mapping, in sequence, a first part of CSI bits, a second part of CSI bits, and bits of the beam-related information, starting from a first non-DMRS symbol of a PUSCH.

66. An information indication method, performed by a network device, comprising:
sending configuration information to a terminal device, wherein the configuration information comprises at least one of the following: a resource for reporting beam-related information, a beam management procedure, a beam indication-related configuration, and a time offset-related configuration; and
receiving beam-related information reported by the terminal device in response to the configuration information, wherein the beam-related information comprises at least one of the following: beam indication information, beam management procedure information, and time offset information.

67. The method according to claim 66, further comprising:
receiving the beam-related information predicted by the terminal device, wherein the beam-related information is predicted when the terminal device detects a signal quality of a link and the signal quality is lower than a threshold; and/or
receiving the beam-related information predicted by the terminal device, wherein the beam-related information is predicted when the terminal device detects a state of the terminal device and the state is in motion.

68. The method according to claim 66 or 67, further comprising:
sending a reference signal, wherein the reference signal is included in the beam-related information.

69. The method according to claim 66, wherein the beam indication information comprises at least one of the following:
a Channel State Information, CSI, reporting configuration;
a Channel State Information-Reference Signal, CSI-RS, resource set;
a Sounding Reference Signal, SRS, resource set;
a Transmission Configuration Indication, TCI, state; and
a spatial relation.

70. The method according to claim 66, wherein the beam management procedure is configured by Radio Resource Control, RRC, or is predefined.

71. The method according to claim 66, wherein a configuration or information of the beam management procedure indicates at least one of the following:
a downlink beam sweeping procedure; and
an uplink beam sweeping procedure.

72. The method according to claim 71, wherein the downlink beam sweeping procedure comprises at least one of the following:
the network device using different beams for transmission, and the terminal device using different beams for reception;
the network device using different beams for transmission, and the terminal device using a same beam for reception; and
the network device using a same beam for transmission, and the terminal device using different beams for reception.

73. The method according to claim 71, wherein the uplink beam sweeping procedure comprises at least one of the following:
the terminal device using different beams for transmission, and the network device using different beams for reception;
the terminal device using different beams for transmission, and the network device using a same beam for reception; and
the terminal device using a same beam for transmission, and the network device using different beams for reception.

74. The method according to claim 66, wherein a start point of the time offset information is a time at which the terminal device reports the beam-related information.

75. The method according to claim 66, wherein the configuration information comprises a CSI reporting configuration list, the CSI reporting configuration list comprises one or more CSI reporting configurations, and the beam indication information indicates one or more selected CSI reporting configurations in at least one of the following ways:
indicating one or more selected CSI reporting configurations to the network device in a form of a bitmap;
indicating the one or more selected CSI reporting configurations to the network device in a form of identifiers;
indicating the one or more selected CSI reporting configurations to the network device in a form of combined identifiers; or
indicating the one or more selected CSI reporting configurations to the network device through a Medium Access Control Control Element, MAC CE.

76. The method according to claim 75, wherein bits in the bitmap correspond one-to-one to the CSI reporting configurations, a total number of bits of the bitmap corresponds to a number of the CSI reporting configurations, and each bit in the bitmap indicates whether a corresponding CSI reporting configuration is selected.

77. The method according to claim 75, wherein an identifier corresponds to one selected CSI reporting configuration.

78. The method according to claim 75, wherein a combined identifier corresponds to one or more selected CSI reporting configurations.

79. The method according to claim 75, wherein the MAC CE comprises at least a region for the CSI reporting configurations, and a number of bits of the region for the CSI reporting configurations is related to the number of the CSI reporting configurations.

80. The method according to claim 66, wherein the configuration information comprises a CSI-RS resource set list, the CSI-RS resource set list comprises one or more CSI-RS resource sets, and the beam indication information indicates one or more selected CSI-RS resource sets in at least one of the following ways:
indicating one or more selected CSI-RS resource sets to the network device in a form of a bitmap;
indicating the one or more selected CSI-RS resource sets to the network device in a form of identifiers;
indicating the one or more selected CSI-RS resource sets to the network device in a form of combined identifiers; or
indicating the one or more selected CSI-RS resource sets to the network device through a MAC CE.

81. The method according to claim 80, wherein bits in the bitmap correspond one-to-one to the CSI-RS resource sets, a total number of bits of the bitmap corresponds to a number of the CSI-RS resource sets, and each bit in the bitmap indicates whether a corresponding CSI-RS resource set is selected.

82. The method according to claim 80, wherein an identifier corresponds to one selected CSI-RS resource set.

83. The method according to claim 80, wherein a combined identifier corresponds to one or more selected CSI-RS resource sets.

84. The method according to claim 80, wherein the MAC CE comprises at least a region for the CSI-RS resource sets, and a number of bits of the region for the CSI-RS resource sets is related to the number of the CSI-RS resource sets.

85. The method according to claim 66, wherein the configuration information comprises an SRS resource set list, the SRS resource set list comprises one or more SRS resource sets, and the beam indication information indicates one or more selected SRS resource sets in at least one of the following ways:
indicating one or more selected SRS resource sets to the network device in a form of a bitmap;
indicating the one or more selected SRS resource sets to the network device in a form of identifiers;
indicating the one or more selected SRS resource sets to the network device in a form of combined identifiers; or
indicating the one or more selected SRS resource sets to the network device through a MAC CE.

86. The method according to claim 85, wherein bits in the bitmap correspond one-to-one to the SRS resource sets, a total number of bits of the bitmap corresponds to a number of the SRS resource sets, and each bit in the bitmap indicates whether a corresponding SRS resource set is selected.

87. The method according to claim 85, wherein an identifier corresponds to one selected SRS resource set.

88. The method according to claim 85, wherein a combined identifier corresponds to one or more selected SRS resource sets.

89. The method according to claim 85, wherein the MAC CE comprises at least a region for the SRS resource sets, and a number of bits of the region for the SRS resource sets is related to the number of the SRS resource sets.

90. The method according to claim 66, wherein the configuration information comprises a TCI state list, the TCI state list comprises one or more TCI states, and the beam indication information indicates one or more selected TCI states in at least one of the following ways:
indicating one or more selected TCI states to the network device in a form of a bitmap;
indicating the one or more selected TCI states to the network device in a form of identifiers;
indicating the one or more selected TCI states to the network device in a form of combined identifiers; or
indicating the one or more selected TCI states to the network device through a MAC CE.

91. The method according to claim 90, wherein bits in the bitmap correspond one-to-one to the TCI states, a total number of bits of the bitmap corresponds to a number of the TCI states, and each bit in the bitmap indicates whether a corresponding TCI state is selected.

92. The method according to claim 90, wherein an identifier corresponds to one selected TCI state.

93. The method according to claim 90, wherein a combined identifier corresponds to one or more selected TCI states.

94. The method according to claim 90, wherein the MAC CE comprises at least a region for the TCI states, and a number of bits of the region for the TCI states is related to the number of the TCI states.

95. The method according to claim 66, wherein the configuration information comprises a spatial relation list, the spatial relation list comprises one or more spatial relations, and the beam indication information indicates one or more selected spatial relations in at least one of the following ways:
indicating one or more selected spatial relations to the network device in a form of a bitmap;
indicating the one or more selected spatial relations to the network device in a form of identifiers;
indicating the one or more selected spatial relations to the network device in a form of combined identifiers; or
indicating the one or more selected spatial relations to the network device through a MAC CE.

96. The method according to claim 95, wherein bits in the bitmap correspond one-to-one to the spatial relations, a total number of bits of the bitmap corresponds to a number of the spatial relations, and each bit in the bitmap indicates whether a corresponding spatial relation is selected.

97. The method according to claim 95, wherein an identifier corresponds to one selected spatial relation.

98. The method according to claim 95, wherein a combined identifier corresponds to one or more selected spatial relations.

99. The method according to claim 95, wherein the MAC CE comprises at least a region for the spatial relations, and a number of bits of the region for the spatial relations is related to the number of the spatial relations.

100. The method according to any one of claims 66 and 70 to 73, wherein the beam management procedure indicates one or more selected beam management procedures in at least one of the following ways:
indicating one or more selected beam management procedures to the network device in a form of a bitmap;
indicating the one or more selected beam management procedures to the network device in a form of identifiers;
indicating the one or more selected beam management procedures to the network device in a form of combined identifiers; or
indicating the one or more selected beam management procedures to the network device through a MAC CE.

101. The method according to claim 100, wherein bits in the bitmap correspond one-to-one to the beam management procedures, a total number of bits of the bitmap corresponds to a number of the beam management procedures, and each bit in the bitmap indicates whether a corresponding beam management procedure is selected.

102. The method according to claim 100, wherein an identifier corresponds to one selected beam management procedure.

103. The method according to claim 100, wherein a combined identifier corresponds to one or more selected beam management procedures.

104. The method according to claim 100, wherein the MAC CE comprises at least a region for the beam management procedures, wherein a number of bits of the region for the beam management procedures is related to the number of the beam management procedures.

105. The method according to any one of claims 66 and 70 to 73, wherein the configuration information comprises a TCI state list, the TCI state list comprises one or more TCI states, and the beam-related information comprises the beam indication information and information of the beam management procedure, and the beam-related information indicates in at least one of the following ways:
indicating one or more selected TCI states and one or more selected beam management procedures to the network device in a form of a bitmap;
indicating the one or more selected TCI states and the one or more selected beam management procedures to the network device in a form of identifiers;
indicating the one or more selected TCI states and the one or more selected beam management procedures to the network device in a form of combined identifiers; or
indicating the one or more selected TCI states and the one or more selected beam management procedures to the network device through a MAC CE.

106. The method according to claim 105, wherein some bits in the bitmap correspond one-to-one to the TCI states, other bits in the bitmap correspond one-to-one to the beam management procedures, a total number of bits of the bitmap corresponds to a number of the TCI states and the beam management procedures, and each bit in the bitmap indicates whether a corresponding TCI state or a corresponding beam management procedure is selected.

107. The method according to claim 105, wherein an identifier corresponds to one selected TCI state or one selected beam management procedure.

108. The method according to claim 105, wherein a combined identifier corresponds to one or more selected TCI states or one or more selected beam management procedures.

109. The method according to claim 105, wherein the MAC CE comprises at least a region for the TCI states and a region for the beam management procedures, wherein a number of bits of the region for the TCI states is related to the number of the TCI states, and a number of bits of the region for the beam management procedures is related to the number of the beam management procedures.

110. The method according to any one of claims 66 and 70 to 73, wherein the configuration information comprises a spatial relation list, the spatial relation list comprises one or more spatial relations, and the beam-related information comprises the beam indication information and information of the beam management procedure, and the beam-related information indicates in at least one of the following ways:
indicating one or more selected spatial relations and one or more selected beam management procedures to the network device in a form of a bitmap;
indicating the one or more selected spatial relations and the one or more selected beam management procedures to the network device in a form of identifiers;
indicating the one or more selected spatial relations and the one or more selected beam management procedures to the network device in a form of combined identifiers; or
indicating the one or more selected spatial relations and the one or more selected beam management procedures to the network device through a MAC CE.

111. The method according to claim 110, wherein some bits in the bitmap correspond one-to-one to the spatial relations, other bits in the bitmap correspond one-to-one to the beam management procedures, a total number of bits of the bitmap corresponds to the number of the spatial relations and the beam management procedures, and each bit in the bitmap indicates whether a corresponding spatial relation or a corresponding beam management procedure is selected.

112. The method according to claim 110, wherein an identifier corresponds to one selected spatial relation or one selected beam management procedure.

113. The method according to claim 110, wherein a combined identifier corresponds to one or more selected spatial relations or one or more selected beam management procedures.

114. The method according to claim 110, wherein the MAC CE comprises at least a region for the spatial relations and a region for the beam management procedures, wherein a number of bits of the region for the spatial relations is related to the number of the spatial relations, and a number of bits of the region for the beam management procedures is related to the number of the beam management procedures.

115. The method according to claim 66, wherein the configuration information comprises a TCI state list, the TCI state list comprises one or more TCI states, and the beam-related information comprises the beam indication information and a preset parameter, and the beam-related information indicates in at least one of the following ways:
indicating one or more selected TCI states and the preset parameter to the network device in a form of a bitmap;
indicating the one or more selected TCI states and the preset parameter to the network device in a form of identifiers;
indicating the one or more selected TCI states and the preset parameter to the network device in a form of combined identifiers; or
indicating the one or more selected TCI states and the preset parameter to the network device through a MAC CE.

116. The method according to claim 115, wherein the preset parameter indicates that a plurality of reference signals use a same downlink spatial domain filter.

117. The method according to claim 115, wherein some bits in the bitmap correspond one-to-one to the TCI states, and each of said bits in the bitmap indicates whether a corresponding TCI state is selected.

118. The method according to claim 115, wherein an identifier corresponds to one selected TCI state.

119. The method according to claim 115, wherein a combined identifier corresponds to one or more selected TCI states.

120. The method according to claim 115, wherein the MAC CE comprises at least a region for the TCI states and a region for the preset parameter, wherein a number of bits of the region for the TCI states is related to the number of the TCI states.

121. The method according to claim 66, wherein the configuration information comprises a CSI reporting configuration list and a time offset list, the CSI reporting configuration list comprises one or more CSI reporting configurations, the time offset list comprises one or more time offset amounts, and the beam-related information comprises the beam indication information and the time offset information, and the beam-related information indicates in at least one of the following ways:
indicating one or more selected CSI reporting configurations and the one or more time offset amounts to the network device in a form of a bitmap;
indicating the one or more selected CSI reporting configurations and the one or more time offset amounts to the network device in a form of identifiers;
indicating the one or more selected CSI reporting configurations and the one or more time offset amounts to the network device in a form of combined identifiers; or
indicating the one or more selected CSI reporting configurations and the one or more time offset amounts to the network device through a MAC CE.

122. The method according to claim 121, wherein some bits in the bitmap correspond one-to-one to the CSI reporting configurations, and each of said bits in the bitmap indicates whether a corresponding CSI reporting configuration is selected.

123. The method according to claim 121, wherein an identifier corresponds to one selected CSI reporting configuration.

124. The method according to claim 121, wherein a combined identifier corresponds to one or more selected CSI reporting configurations.

125. The method according to claim 121, wherein the MAC CE comprises at least a region for the CSI reporting configurations and a region for the time offset amounts, wherein a number of bits of the region for the CSI reporting configurations is related to the number of the CSI reporting configurations.

126. The method according to claim 66, wherein the network device receives the beam-related information through Uplink Control Information, UCI, a bit sequence of the UCI comprises at least one of the following: bits of the beam-related information, Hybrid Automatic Repeat Request, HARQ, bits, Scheduling Request, SR, bits, and CSI bits;
wherein when no CSI report has two parts, the two parts comprising a first part and a second part, there is only one bit sequence of the UCI, and a mapping order of the bits of the beam-related information in the bit sequence of the UCI satisfies one of the following rules:
the bits of the beam-related information are after the SR bits and before the CSI bits; and
the bits of the beam-related information are after the CSI bits;
when at least one CSI report has two parts, the bit sequence of the UCI comprises a first UCI bit sequence and a second UCI bit sequence, and a mapping order of the bits of the beam-related information in the bit sequence of the UCI satisfies one of the following rules:
the bits of the beam-related information are located in the first UCI bit sequence and are after the SR bits;
the bits of the beam-related information are located in the first UCI bit sequence and are after the first part of the CSI bits;
the bits of the beam-related information are located in the second UCI bit sequence and are before the second part of the CSI bits; and
the bits of the beam-related information are located in the second UCI bit sequence and are after the second part of the CSI bits.

127. The method according to claim 66, wherein when a PUCCH resource carrying an SR overlaps with a PUCCH resource carrying the beam-related information, the SR is multiplexed onto the PUCCH resource carrying the beam-related information.

128. The method according to claim 66, wherein when a PUCCH resource carrying the beam-related information overlaps with a PUCCH resource carrying at least one of HARQ, an SR, and CSI, a PUCCH resource is selected from overlapping PUCCH resources to transmit at least one of the beam-related information, the HARQ, the SR, and the CSI.

129. The method according to claim 66, wherein calculation or allocation of coded modulation symbols is performed according to an order of one of the following:
HARQ, the beam-related information, a first part of CSI, a second part of CSI;
HARQ, a first part of CSI, the beam-related information, a second part of CSI; and
HARQ, a first part of CSI, a second part of CSI, the beam-related information.

130. The method according to claim 66, wherein resource mapping is performed according to one of the following rules:
mapping, in sequence, bits of the beam-related information, a first part of CSI bits, and a second part of CSI bits, starting from a first non-DMRS symbol of a PUSCH;
mapping, in sequence, a first part of CSI bits, bits of the beam-related information, and a second part of CSI bits, starting from a first non-DMRS symbol of a PUSCH; and
mapping, in sequence, a first part of CSI bits, a second part of CSI bits, and bits of the beam-related information, starting from a first non-DMRS symbol of a PUSCH.

131. A terminal device, comprising a processor, wherein the processor is configured to execute instructions to implement the method according to any one of claims 1 to 65.

132. A network device, comprising a processor, wherein the processor is configured to execute instructions to implement the method according to any one of claims 66 to 130.
